(19) **Europäisches Patentamt / European Patent Office / Office européen des brevets**

(11) **EP 1 956 482 B1**

(12) **EUROPEAN PATENT SPECIFICATION**

(45) Date of publication and mention
of the grant of the patent:
**17.08.2011 Bulletin 2011/33**

(51) Int Cl.:
**G06F 9/445** (2006.01)

(21) Application number: **07388042.9**

(22) Date of filing: **13.06.2007**

(54) **Generating delta updates for a processing device**

Erzeugung von Delta-Aktualisierungen für eine Verarbeitungsvorrichtung

Génération de mises à jour delta pour dispositif de traitement

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.02.2007 US 900548 P**

(43) Date of publication of application:
**13.08.2008 Bulletin 2008/33**

(73) Proprietor: **Telefonaktiebolaget LM Ericsson**
**16483 Stockholm (SE)**

(72) Inventors:
• **Eker, Johan**
**223 55 Lund (SE)**
• **von Platen, Carl**
**216 19 Malmö (SE)**

(74) Representative: **Schwarze, Holm et al**
**Zacco Denmark A/S**
**Hans Bekkevolds Allé 7**
**2900 Hellerup (DK)**

(56) References cited:
**EP-A- 1 333 375       EP-A- 1 533 695**
**WO-A-2004/031961    US-A1- 2003 084 434**

• **BAKER B S ET AL: "Compressing differences of executable code" WORKSHOP ON COMPILER SUPPORT FOR SYSTEM SOFTWARE AND ACM SIGPLAN, XX, XX, 22 April 1999 (1999-04-22), pages 1-10, XP002315222**

## Description

TECHNICAL FIELD

This invention relates to the updating of memory content stored in a storage medium, which storage medium comprises a plurality of memory sectors.

BACKGROUND AND DESCRIPTION OF RELATED ART

Many modem electronic devices, e.g. embedded devices, are controlled by software stored in flash memory. Flash memory is a type of memory that is frequently used in electronic devices, because it allows multiple rewrites. However, the write operations are limited to entire memory sectors, so-called erase blocks, at a time.

When the software stored in a flash memory of an electronic device is updated, e.g. in order to add new features to the software and/or to correct errors in the current version of the software, some or all of the memory sectors of the flash memory are re-written/re-programmed or "re-flashed". In general, it is desirable to minimize the number of flash sectors that are re-written during a software update, in order to minimize the time and energy consumption required for installing the software update.

In particular, an application where update times are of great concern is the over-the-air (OTA) update of mobile terminals. In such applications, it is known to distribute only modifications to the current image to the mobile terminal rather than the entire updated image. The modifications are generally referred to as delta-files. Typically, in such systems, a software tool for creating a delta file, the so-called delta generator, is executed on a data processing device for generating and/or distributing software updates, and a corresponding software tool for applying a delta file is executed on the target processing device whose memory contents are to be updated. Typically, a delta generator takes two binary images as inputs, plus typically some extra link information such as map-files etc. From this input information, the delta generator calculates a delta file. The delta file may then be transferred to the target processing device where it is applied by a delta update tool adapted to apply delta files created by the delta generator. The delta update tool thus receives the delta file and applies the received modifications to the current image which is thereby transformed to the updated version.

US 6,018,747 describes an in-place delta update mechanism wherein the target device stores the updated version in the same memory region in which the current version resides.

It is generally desirable to reduce the size of the delta-files, in order to reduce the amount of data that has to be transmitted via the communications channel used for the OTA update.

Furthermore, it is generally desirable to reduce the amount of storage capacity and computational resources required in the mobile terminal in order to perform the software update.

It is further a general problem of such update systems that the terminal may not be functional during the update process. Since the reflashing/reprogramming can be a time consuming process, the reflashing often dominates the downtime of the terminal when performing a software upgrade. Hence, it is desirable to reduce the time required for reflashing the memory and, thus, the downtime of the system.

For example, in order to implement an in-place update mechanism in a failsafe manner, the current memory contents may initially be copied to a temporary back-up location from where they are read and processed together with the received delta file to create the updated memory content which is stored in the original location of the current memory content. Consequently, this process requires an additional back-up copy operation, thus resulting in a longer update time.

Furthermore, due to the constraints of the flash memory mentioned above, even small updates of the source code of the software may cause a large portion of the flash pages to be updated, since changing even a single byte requires an entire memory sector to be completely rewritten.

WO 2004/031961 discloses a system and method for updating a binary image stored across a block-structured memory device, such as a flash memory device. From a comparison of original and new images, an update package is generated which includes an encoded instruction set comprising COPY and ADD operations instructing the copying of source data from locations in the memory device and adding other data provided in the update package. To apply the update, a decoder starts from the beginning of the current image, and builds-up a replacement for the Xth block of the image in a scratch memory. When the block is completely built the actual destination memory block X is erased and reprogrammed with the content of the new version of that block present in the scratch memory area.

Published international application WO 05/085996 discloses a method of updating program code storedin flash memory where an optimisation step is performed at the linker stage during the generation of the executable code, so as to decrease the number of memory sectors that are affected by the software update.

Published international application WO 05/040982 discloses a dynamic addressing scheme to manage function calls, global variables and constant variable references among components of software code. Changes to a component during file upgrades that result in location changes of the component in memory are recorded so as to maintain the integrity of the references.

Hence, the above prior art systems may generate the updated image such that rippling effects are avoided, i.e. the growth of one module is less likely to cause subsequent modules to be offset. This can be achieved in a number of ways, for example by using feedback linking, by adding padding space between modules, or by strict modularization, i.e. a mechanism for providing inter-module function calls by means of an indirect dispatch mechanism.

However, when a system is updated using the above prior art systems, secondary changes, such as changes to references pointing to moved code segments, account for a considerable portion of the erase blocks that require rewriting. While these changes are relatively small, the fact that an erase block containing such a change needs to be completely rewritten may cause their contribution to the total update time to become substantial.

Hence, it remains a problem to provide an improved method for generating delta updates.

SUMMARY

Disclosed herein is a method of generating a delta update item for updating memory content of a storage medium of a processing device from a current version to an updated version of the memory content, the storage medium being arranged to have stored the memory content organised as one or more memory sectors, each sector having a predetermined sector size, the processing device being arranged to address the memory content stored on the storage medium as one or more pages of memory content, each page having a predetermined page size not larger than the sector size, and each page being mapped to a respective location in the storage medium, the method comprising:

> a) determining a change of memory content in a first sector from the current version to the updated version;
> b) determining at least a first page including said change, the first page being mapped to a memory location included in the first sector;
> c) generating update instructions for causing the processing device to store updated memory content corresponding to the first page at a location in a second sector;
> d) generating update instructions for causing the processing device to remap the first page to the location in the second sector.

Consequently, an in-place application of the delta-file is avoided, since the logical address is remapped to a new physical address. Furthermore, the need for back-up copying is avoided during application of the delta-file, thereby reducing the time required for applying the delta.

In some embodiments, the page size is smaller than the sector size. Consequently, instead of rewriting the complete memory sector, the memory pages including the updates are written to a new physical location and the logical address of the updated pages are remapped to their new respective locations, thereby avoiding the need of rewriting an entire sector merely because of one or more small changes. A change may include one or a number of bytes that differ in the current and updated versions of the memory content.

The processing device may be adapted to access the data stored in the memory based on virtual address information, and to translate the virtual address information into a physical address of the memory. Virtual memory or virtual memory addressing is a memory management technique, used by operating systems of computers and other processing devices, wherein non-contiguous memory is presented to a software/process as contiguous memory. This contiguous memory is referred to as the virtual address space.

Virtual memory is frequently implemented using paging. In paging, a range of consecutive addresses in a virtual address space (the range of addresses used by the processor) is mapped to a corresponding range of physical addresses of the storage medium. The memory referenced by such a range is called a page. The page size is typically in the range of 512 to 8192 bytes with a few e.g. 4 kbytes currently being a very common choice.

The translation from virtual to physical addresses is typically implemented by a so-called memory management unit (MMU) that may be provided as a module of the central processing unit (CPU), or as an auxiliary, closely coupled chip. Memory management units thus are a class of computer hardware and/or software components that may be responsible for handling memory accesses requested by the CPU. Apart from the translation of virtual addresses to physical addresses (i.e., virtual memory management), the MMU may perform further functions such as memory protection, cache control, bus arbitration, etc.

As mentioned above, in virtual memory systems, the loading - or paging in - of memory content corresponding to virtual memory pages is typically, though not necessarily, performed by or at least under the control of a memory management unit. Accordingly, in one embodiment, the memory management unit is adapted to organize the data as memory pages of data in a virtual memory space, each page having a predetermined page size, and to map pages of the virtual memory space to physical addresses of the storage medium. Hence, the process uses the MMU for managing minor changes to a memory sector.

In some embodiments, the memory management unit is adapted to map the pages of the virtual memory space by means of a mapping table including mapping information between virtual memory pages and physical memory addresses in the storage medium. Generating instructions for causing the processing device to remap the first page to the location in the second sector may thus include generating an updated page table. Thus, in this embodiment, the delta generator generates an updated mapping table or at least instructions for causing the processing device to update the mapping table in addition to updating the actual memory content.

In some embodiments, the method comprises:

- identifying all changes in memory content in the first sector;
- evaluating a predetermined condition for selecting performing an in-place update of the first sector;
- if the predetermined condition is fulfilled, generating update instructions for causing the processing device to store updated memory content corresponding to the first page in the first sector; otherwise performing above steps c) and d).

Consequently, the process may perform a trade-off between in-place updates and updates utilising MMU remapping.

In some embodiments, the delta generator may determine the total size of all pages included in the first sector that are determined to include respective changes from the current version to the updated version. If said total size is larger than a predetermined threshold, the process may thus generate update instructions for causing the processing device to store updated memory content corresponding to the current memory content of the first sector in the first sector; otherwise, i.e. when the total size of the changes in the first memory sector is relatively small, the process may perform the re-allocation and remapping of one or more affected pages as described herein. Hence, in this embodiment, the remapping process described herein is only performed for relatively small changes, while the entire memory sector is rewritten, when large parts, e.g. many pages included in it, are affected by the changes.

In another embodiment, evaluating comprises determining whether the identified changes are secondary effects caused by changes in other sectors, and wherein the predetermined condition is fulfilled if the identified changes include further changes in addition to the secondary effects. Consequently, in this embodiment, modified sectors that include other than secondary changes are updated in-place, while the remaining sectors are updated using MMU re-mapping.

When the method further comprises generating instructions for causing the processing device to store in the second sector updated memory content of a plurality of pages determined to include respective changes, a plurality of unlocalised changes from one or more memory sectors are effectively localised in a single memory sector that includes a plurality of changed pages, thus considerably reducing the number of memory sectors that need to be re-written.

To leverage from the use of an MMU when performing an incremental update, it is beneficial to update the image in a non-linear fashion, i.e. in an order different from the sequential order of virtual addresses or the sequential order of copy and add instructions generated by prior art delta generators. Described herein are embodiments of a method that generates a delta file that reflects the order in which the image is updated. Furthermore, the process updates the page table which controls the address translation of the MMU. Interesting features of some embodiments of the method described herein include:

- A determination of the order in which the new pages of the updated image are created.
- A determination of the order in which the erase blocks are allocated for the update.
- A determination of the translation of logical addresses to physical addresses.
- An exclusion of possible unchanged memory pages from the update (e.g. achieved by feedback linking or some other means).

The present invention can be implemented in different ways including the method described above and in the following, a method of loading data into a storage medium of a processing device, a processing device, and further systems and product means, each yielding one or more of the benefits and advantages described in connection with the first-mentioned method, and each having one or more preferred embodiments corresponding to the preferred embodiments described in connection with the first-mentioned method.

In particular, according to one aspect a method of updating memory content of a storage medium of a processing device from a current version to an updated version of the memory content is disclosed. The storage medium is arranged to have stored the memory content organised as one or more memory sectors, each sector having a predetermined sector size. The processing device is arranged to address the memory content stored on the storage medium as one or more pages of memory content, each page having a predetermined page size not larger than the sector size, and each page being mapped to a respective location in the storage medium. The method comprises:

- receiving a delta update item including update instructions for causing the processing device to update a current memory content stored in the storage medium to an updated memory content,
- storing, responsive to the received update instructions, updated memory content corresponding to a first page at a location in a second sector, wherein the current version of the first page is mapped to a location in a first sector of the storage medium, and wherein the first page includes a change of memory content from the current version to the updated version; and
- remapping, responsive to the received update instructions, the first page to the location in the second sector.

Typically, the update instructions cause the processing device to read current memory content from the first sector and to generate the updated memory content from the read current memory content and the received update instructions.

When the processing device directly stores the generated updated memory content to the second sector, time-consuming back-up copies are avoided.

It is noted that the features of the methods described above and in the following may be implemented in software and carried out on a data processing system or other processing means caused by the execution of program code means such as computer-executable instructions. Here and in the following, the term processing means comprises any circuit and/or device suitably adapted to perform the above functions. In particular, the term processing means comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

For example, the program code means may be loaded in a memory, such as a Random Access Memory (RAM), from a storage medium or from another computer/computing device via a computer network. Alternatively, the described features may be implemented by hardwired circuitry instead of software or in combination with software.

According to another aspect, a data processing system is suitably programmed to perform the steps of the method described above and in the following.

According to another aspect, a computer program product comprises program code means adapted to cause a data processing system or other processing means to perform the method described above and in the following, when said program code means are executed on the data processing system or other processing means. The computer program product may be embodied as a computer-readable medium having stored thereon said program code means, such as optical disks, hard disks, floppy disks, tapes, CD ROMs, flash memory, memory sticks, and/or other types of magnetic and/or optical storage medium.

According to another aspect, a processing device comprises a storage medium. The storage medium is arranged to have stored the memory content organised as one or more memory sectors, each sector having a predetermined sector size. The processing device is arranged to address the memory content stored on the storage medium as one or more pages of memory content, each page having a predetermined page size not larger than the sector size, and each page being mapped to a respective location in the storage medium. The processing device is configured:

- to receive a delta update item including update instructions for causing the processing device to update a current memory content stored in the storage medium to an updated memory content,

- to store, responsive to the received update instructions, updated memory content corresponding to a first page at a location in a second sector, wherein the current version of the first page is mapped to a location in a first sector of the storage medium, and wherein the first page includes a change of memory content from the current version to the updated version; and

- to remap, responsive to the received update instructions, the first page to the location in the second sector.

For the purpose of the present description, the terms processing device and electronic device comprise any device comprising a memory or other storage medium, e.g. a flash memory, for storing data such as program code and constant data. Examples of such devices include portable radio communications equipment and other handheld or portable devices. The term portable radio communications equipment includes all equipment such as mobile telephones, pagers, communicators, i.e. electronic organisers, smart phones, personal digital assistants (PDAs), handheld computers, media players, such as mp3 players, digital cameras or other recording devices, embedded devices in the automotive industry, medical devices, or the like. The processing device may include a processing unit or other processing means coupled to the storage medium and adapted to execute programs stored in the storage medium and/or to process data stored in the storage medium. The processing unit may thus be arranged to address the memory content stored in the storage medium as one or more pages of memory content as described herein and to perform the steps of the method described herein.

The storage medium/device may be a non-volatile storage medium, such as flash memory, e.g. NOR or NAND memory. It will be appreciated though that the method, system and apparatus described herein may also be implemented in connection with other types of storage media, such as other types of flash memory, and/or other types of storage media that are writable in sectors, such as hard disks, or the like. In such storage media, data is stored in entities larger than 1 byte, e.g. as disk sectors of a hard disk or erase blocks. Erase block sizes may range from several kbytes, e.g. 16 kbytes to several tens or even hundreds of kbytes. Common erase block sizes of NOR memory are 32kbytes, 64 kbytes or more. For the purpose of the present description the entities larger than 1 byte in which the data is stored and/or accessed will be referred to as memory sectors or simply sectors.

In one embodiment, the processing device further comprises a memory management unit for controlling access to the storage medium by the processing device; wherein the memory management unit is adapted to organize data as pages of data in a virtual memory space, each page having a predetermined page size, and wherein the memory management unit is adapted to map pages of the virtual memory space to physical addresses of the storage medium. The memory management unit may be implemented as a hardware component included in or coupled to a processing unit, e.g. the central processing unit, of the processing device. Alternatively, the memory management unit may be implemented at least in part as one or more software components.

According to another aspect, a data carrier comprises computer readable update instructions as described herein. The data carrier may be embodied as a computer-readable storage medium, as a carrier signal modulated to encode the update instructions, or in any other suitable way.

BRIEF DESCRIPTION OF THE DRAWINGS

The above and other aspects will be apparent and elucidated from the embodiments described in the following with reference to the drawings in which:

Fig. 1 schematically shows a block diagram of a system for generating a memory image for a processing device such as a mobile terminal and for storing the generated image in the processing device.

Fig. 2 schematically shows a block diagram of an embodiment of a processing device such as a mobile terminal.

Figs. 3a-b show flow diagrams of an example of a process for generating a delta update package.

Figs. 4a-c and 5a-d illustrate examples of update scenarios.

Figs. 6a-b illustrate an update of a version 1 of a software to a version 2 of a software.

Fig. 7 shows a flow diagram of an example of a process for generating a delta update package.

Fig. 8 illustrates an example of a delta file which includes sections, each of which corresponds to an individual page of memory.

Fig. 9 illustrates an example of physical and logical addresses.

Figs. 10 and 11 illustrate an embodiment of a process for generating incremental update instructions.

Fig. 12 shows an example of a file system and an index block.

DETAILED DESCRIPTION

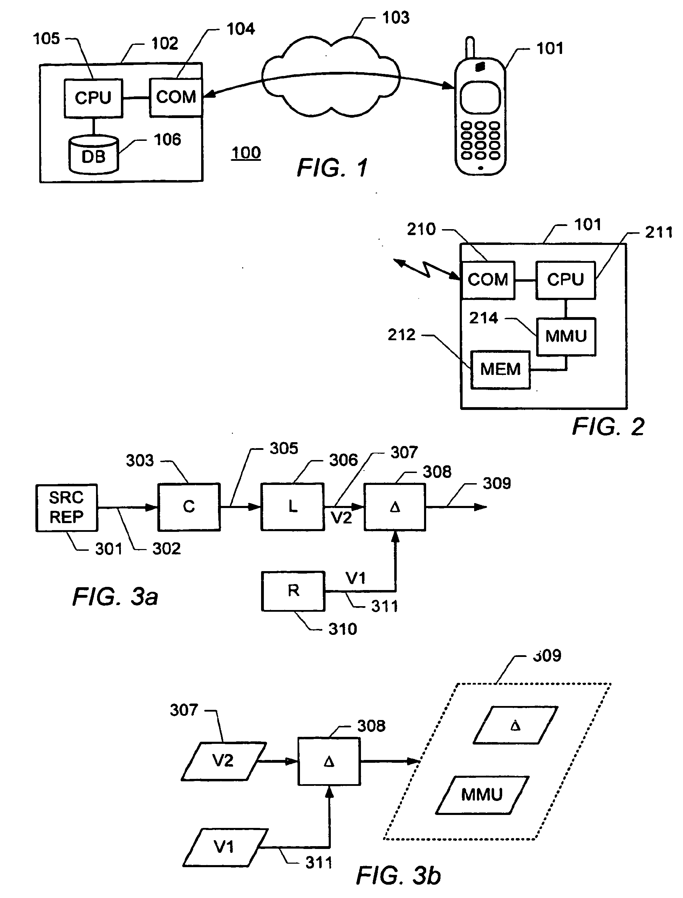

Fig. 1 schematically shows a block diagram of a system for generating a memory image for a processing device such as a mobile terminal, e.g. an image of an initial or updated build of one or more software modules and/or constant data, and for uploading the generated image to the processing device. The system, generally designated 100, comprises a software distribution system 102 and a processing device 101 connectable to the software distribution system 102 via a communications interface 103.

The software distribution system 102 may comprise a server computer or other data processing system having access to the communications interface 103. In some embodiments, the functionality of the software distribution system 102 may be distributed among a plurality of computers, e.g. computers connected via a computer network, e.g. a local area network, a wide area network, an Internet, or the like. The software distribution system 102 comprises an interface circuit 104 allowing the software distribution system 102 to communicate data via the communications interface 103. For example, the interface circuit 104 may comprise a serial port, a parallel port, a short range wireless communications interface, e.g. an infrared port, a Bluetooth transceiver, or the like. Further examples of interface circuits include a network card, a DSL modem, a gateway computer, a wireless communications circuit for cellular telecommunications, or the like.

The software distribution system 102 further comprises a processing unit 105, e.g. the CPU of a server computer, suitably programmed to control and perform the image generation and distribution process. As will be described in greater detail below, when creating the delta update, the image generation and distribution process takes advantage of the presence of a memory management unit (MMU) in the processing device. An updated build may be built in such a way that rippling effects are avoided, i.e. such that the growth of one module does not cause all subsequent modules to be offset. This can be achieved in a number of ways, for example using feedback linking as described in published international application WO 2007/020083, by introducing padding space in between modules, by strict modularization, and/or the like.

In prior art systems, when a system is updated, secondary changes, such as changes to references pointing to moved code segments, often account for a great deal of the touched/modified erase blocks. While these changes are typically relatively small, the fact that an erase block containing such a change needs to be completely rewritten causes their contribution to the total update time to become substantial.

Embodiments of the method described herein utilise the presence of an MMU in the target device for managing minor changes to an erase block. Instead of rewriting the complete erase block, the updates are written to a new physical location and the MMU is used to remap the logical address to the new physical location. The delta generator is thus responsible for creating not only the delta update file, but also an updated page table for the MMU.

The processing unit 105 may further perform the actual code generation process, e.g. including one or more compilation and linking steps. Alternatively, the code generation may be performed by a separate computer system, and the generated code may be transferred to the processing unit 105, e.g. in the form of executable code generated by a linker. The software distribution system 102 may further comprise additional components, such as a database 106 or other repository for the software to be distributed, and/or further components (not explicitly shown) for e.g. version management and/or the generation and management of incremental software updates, security modules, e.g. for integrity protecting and/or authenticating the distributed image data, e.g. by public-key and/or private-key security mechanisms, and/or the like.

The communications interface 103 may be any suitable wired or wireless communications interface for communicating data between the software distribution system 102 and the processing device 101. For example, in the case of a mobile telephone adapted to communicate via a cellular communications network, e.g. a GSM network, a UMTS network, a GPRS network, or the like, the communication between the software distribution system and the mobile terminal in connection with a software update may be performed via the cellular communications network, thereby avoiding the need for additional communications interfaces in the mobile terminal. Further examples of suitable communications interfaces include a serial interface, a universal serial bus (USB), an infrared interface such as IrDa, a local area network, a short-range radio-frequency interface, e.g. according to the Bluetooth standard, and/or the like.

Hence, in order to load new software or to update existing software and/or constant data on the processing device 101, the processing device 101 may receive loading/updating instructions from the software distribution system 102. In a differential (or delta) software updating system 102 using delta files, the updating instructions are generated such that they enable the processing device 101 to generate the updated software version from the existing version already stored in the processing device 101 and from additional information included in the updating instructions.

Hence, in the above, one possible scenario is described for distribution of software and/or constant data. However, it will be appreciated that the generation of the memory layout and delta files described herein may be applied to other distribution scenarios as well. For example, the software and/or constant data may be provided to the target device via other media, e.g. other communications channels, via a computer-readable medium, etc.

Fig. 2 schematically shows a block diagram of an example of a processing device such as a mobile terminal. The processing device 101 comprises a central processing unit (CPU) 211 and a memory 212, such as a NOR flash memory, accessible to the processing unit 211. The CPU may be implemented by a single chip or by multiple processors. For example, the CPU may include a suitably programmable microprocessor. Using instructions received from memory 212, the CPU 211 controls the operation of the processing device, e.g. the reception and manipulation of input data and the output and display of data on output devices. In the case of a mobile terminal the operation may further include radio-based communication via a cellular communications network. To this end, CPU 211 may further control and/or interoperate with additional components of the processing device, such as one or more communications components 210. The communications components 210 may include a suitable transmitter and receiver circuitry for transmitting/receiving communications signals, circuitry for suitably processing the signals, e.g. modulating, coding, amplifying, etc., the signals by suitable techniques well known in the art of radio communications. Further examples of communications components include circuitry or devices for providing a suitable wired or wireless communications interface for communicating data between the software distribution system 102 and the processing device 101 as described above.

The memory 212 includes operating instructions, program code, data and objects used by the CPU 211 to perform its functions. For example, in an execution-in-place system, program code and data objects may be stored in and executed directly from memory 212, e.g. a NOR flash memory. Nevertheless, it will be appreciated that in other embodiments, memory 212 may be utilised as a secondary memory, and before comencment of operation, the program code may be loaded into a primary memory, e.g. a RAM. Such a mechanism may, for example, be used in connection with NAND flash memory as memory 212.

In the example of fig. 2, the CPU 211 is coupled to the memory 212 via a Memory Management Unit (MMU) 214. The MMU 214 is typically implemented as a hardware component and is configured to map virtual addresses received from CPU 211 to physical addresses in the memory 212. The virtual memory utilized via MMU 214 is broken into pages, preferably of identical size.

Modern MMUs typically divide the virtual address space into pages having a page size in bytes that is a power of 2. The bottom n bits of the address typically represent the offset within a page, and are left unchanged, while the upper address bits are the virtual page number, thus providing a mapping from a range of consecutive addresses in virtual address space to a range of addresses in physical address space.

The mapping between virtual pages and physical locations in memory 212 may be performed by means of a page table which relates virtual page numbers to physical locations, e.g. page frame numbers, and which may be maintained in the memory 212.

Memory 212 may have stored thereon a memory image, e.g. as generated by and received from a software distribution system as described above. For example, the memory 212 may have stored thereon the firmware, e.g. including an operating system, of the processing device 101 that implements the basic functions of the processing device when executed by the CPU 211. The memory 212 may have further stored thereon application software providing additional functionality when executed by the central processing unit 211.

Memory 212 may be non-volatile memory such as flash memory, ROM, a hard disk, or an input/output device, a RAM, or the like. For example, memory 212 may comprise flash memory allowing data to be written in sectors/erase blocks of a predetermined size, each sector being adapted to store a plurality of bytes of data. However, it is understood that any other addressing of the storage medium may be used, instead. It is further understood that the method of storing data described herein may be applied to the entire content of memory 212, or only to a part of the contents.

In the following, an embodiment of a method for processing data for storage in a processing device will be described.

Figs. 3a-b show flow diagrams of a process for processing data for storage in a storage medium of a processing device. For example, the process may be implemented as a part of a build process for the generation of a software version or build for installation in a processing device. Typically, such a build process receives source code modules, compiles and links the source code modules resulting in an executable file to be loaded into the device. The process described herein, may thus be performed after the linker stage, e.g. as a separate process or as an integral part of the build process. Accordingly, the process described herein may be performed by a separate software application, or by an integrated application or suite of application for performing the entire build process.

Fig. 3a shows a block diagram of an embodiment of a software update process. Initially, a compiler 303 receives one or more source code modules 302 from a source code repository 301, e.g. a database of source codes, a version management system, or directly from a source code editing tool. The source code modules thus include the source code of the updated software version. The compiler 303 generates a number of object code modules 305 that are fed into a linker 306. The linker 306 combines the object code modules 305 into an absolute file 307 ready for execution. One of the tasks performed by the linker module 306 is the resolution of cross-references among separately compiled object code modules and the assigning of final addresses to create a single executable program 307. Hence, the output 307 from the linker is a file that can directly be loaded into ,e.g. the flash memory of a device that is to execute the program. The linker output 307 will also be referred to as a memory image.

The linker output 307 is fed into a delta file generation module 308, also referred to as a delta file generator. The delta file generator 308 receives the binary (updated) image 307 and a corresponding current memory image 311 as inputs and generates a delta file 309 that is sent as an update package, or as a part of an update package, to the device whose memory is to be updated from the current memory image to the updated memory image. For example, the current memory image may have been generated by the compiler and linker during an initial software generation or a previous software update. The current memory image 311 may, for example, be stored in and retrieved from a repository 310, e.g. a suitable database, for image files. In some embodiments the repository 310 may be part of the same database system as the source repository 301. In some embodiments, the delta generator 308 may receive additional inputs, e.g. from the repository 310, such as extra link information, e.g. in the form of a so-called map file.

The generation of the delta file may schematically be illustrated by the following operations

$$\text{file}_{\text{new}} - \text{file}_{\text{base}} \rightarrow \Delta\text{file}.$$

Correspondingly, the actual generation of the new version may then be performed by the mobile terminal according to the following operation

$$\text{file}_{\text{base}} + \Delta\text{file} \rightarrow \text{file}_{\text{new}}.$$

It is understood that the above operations of generating the delta file (denoted as "-" in the above notation) and generating the new version on the mobile terminal (denoted as "+" operation in the above notation) may comprise more or less complex operations. Examples of suitable delta file techniques include the methods described in US 6,546,552 and in "Compressing Differences of Executable Code" by Brenda Baker, Udi Manber, and Robert Muth, in ACM SIGPLAN Workshop on Compiler Support for System Software (WCSSS'99), 1999.

Hence, fig. 3a illustrates a development tool chain. The delta update package is created in the last step using only the actual images plus map files. The delta generator is run as the last step. In some embodiments the delta generator has no knowledge of what has been processed in the previous steps. In order to create small update packages, the delta creator typically attempts to detect what type of changes that have been made to the images between the previous version (V1) and the updated version (V2). This may include a modularization of the image by reverse engineering the linking process, and thereby, temporary, removing image inter- dependencies. It is thus a difficult task for the delta generator to create a delta file in which modifications are not only few, but also local.

In a so-called feedback linker scheme, the linker 306 may receive information stored in the repository 310 about the previous memory image/build.

As shown in fig. 3b, an embodiment of the delta generator 308 receives the versions V1 and V2 and generates a delta update package 309 which, in addition to a delta update file, e.g. a standard delta update file, includes an update to the MMU page table. Hence, the delta generator reads the two different versions and calculates a delta update file and an update to the MMU page table, in order to minimize or at least reduce the number of affected erase blocks.

A typical delta generator calculates an update file which includes two types of commands: add and copy. Data that is identical between versions are recycled using a copy command, while new data is taken care of with an add command. As mentioned above, a problem with prior art delta updates is the long application time which for a terminal with 32 MB flash memory may take up to 30 minutes. Even though reading and writing to flash memory may not be particularly slow as such, updating the terminal in a fault proof fashion requires multiple rewrites of updated erase blocks for backup reasons. For example, if an erase block *Block1* shall be updated such that *New[Block1] = Old[Block1] + updates* in a safe way, a process may perform this update in several steps:

1. Copy content of *Block1* to RAM
2. Modify RAM using the delta update file until it becomes *New[Block1]*
3. Write content of RAM to temporary flash storage *Tmp*
4. Copy *Tmp* to *Block1*

The above update operation for a simple example requires two erase block rewrites in order to update one erase block. More complicated scenarios, with e.g. additional circular dependencies where several blocks depend on each other, may even require relatively more rewrites.

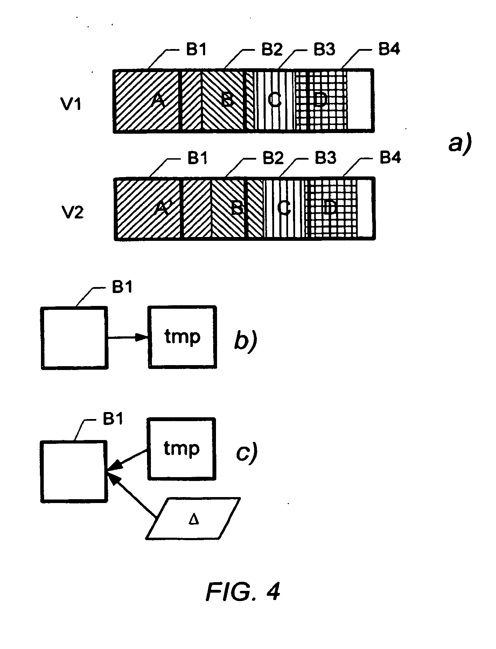

Fig. 4 illustrates an example of a memory layout of a storage medium of a processing device. Fig. 4a shows a situation with two versions of the same software, designated V1 and V2, respectively. Each version includes four modules designated A-D, and the versions occupy erase blocks B1-B4. The first module designated "A" has grown bigger in version V2 compared to version V1. Using standard updating techniques in the example of fig. 4 involves rewriting all memory blocks, where each rewrite involves an additional writing of an erase block for each updated block. Figs. 4b-c show the procedure for updating the first erase block B1, but the same procedure may be performed for each of the four blocks. Thus a change in module "A" causes a domino effect requiring all subsequent modules to be moved in memory. In order to make the application of the delta file more fault proof (against for example power loss) the content of block B1 is initially stored in a temporary area "tmp" as illustrated for erase block B1 in fig. 4b. In a subsequent step illustrated in fig. 4c, the content of the temporary area and the delta file Δ are processed to obtain the updated block content which is stored in erase block B1. This procedure causes in total 8 erase block writes for updating the memory of fig. 4a.

An MMU-enabled delta generator described herein has additional degrees of freedom in that it may separate between the physical memory view and the logical memory view. This distinction allows the delta generator to optimize the update package in order to minimize application time.

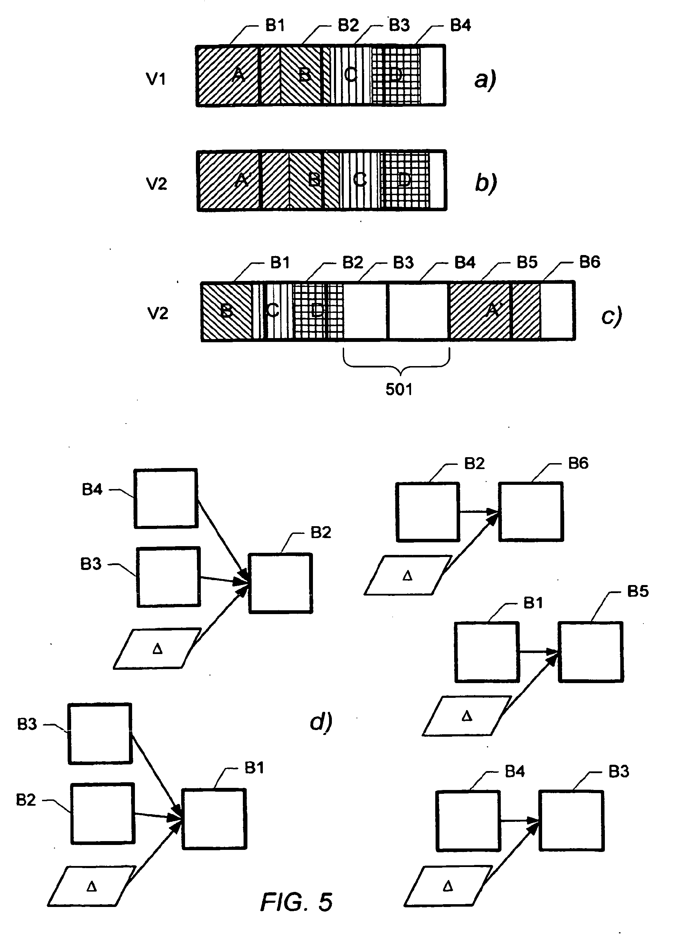

This may be illustrated by revisiting the example from Fig. 4 as illustrated in Fig. 5. Fig. 5a shows the memory layout of the previous version V1, and fig. 5b shows the logical memory view of the updated version V2. As in the example of fig. 4, the module A of version V1 is assumed to have increased in size resulting in module A' of version V2. In this example, the process utilises the MMU to make the logical memory layout different from the physical one. Fig. 5c illustrates the resulting physical memory layout of version V2.

By remapping module A' to some empty erase block(s) (in this example blocks B5 and B6), the process avoids the need for backup copying of the remaining erase blocks. This is illustrated in fig. 5d which shows that the content of block B5 in the updated version V2 is generated from the content of B1 in version V1 and the delta file Δ; the content of block B6 in the updated version V2 is generated from the content of B2 in version V1 and the delta file Δ; the content of block B1 in the updated version V2 is generated from the contents of blocks B2 and B3 in version V1 and the delta file Δ; the content of block B2 in the updated version V2 is generated from the contents of blocks B3 and B4 in version V1 and the delta file Δ; finally, the content of block B3 in the updated version V2 is generated from the content of B4 in version V1 and the delta file Δ. Thus, the process only requires 5 erase blocks to be written to.

It will be appreciated that this process involves a trade-off between update time and memory usage. In the example of fig. 5, application time is saved by basically shifting the contents of the blocks B1 and B2 to the right resulting in fewer erase block rewrites, but requiring two extra erase blocks. In the example of fig. 5 involving only a small number of erase blocks, the cost may actually overshadow the gain, but for larger systems, e.g. with hundreds of erase blocks, the required extra memory may still only be one or two extra erase blocks and thus making this MMU enabled delta generator approach much more feasible.

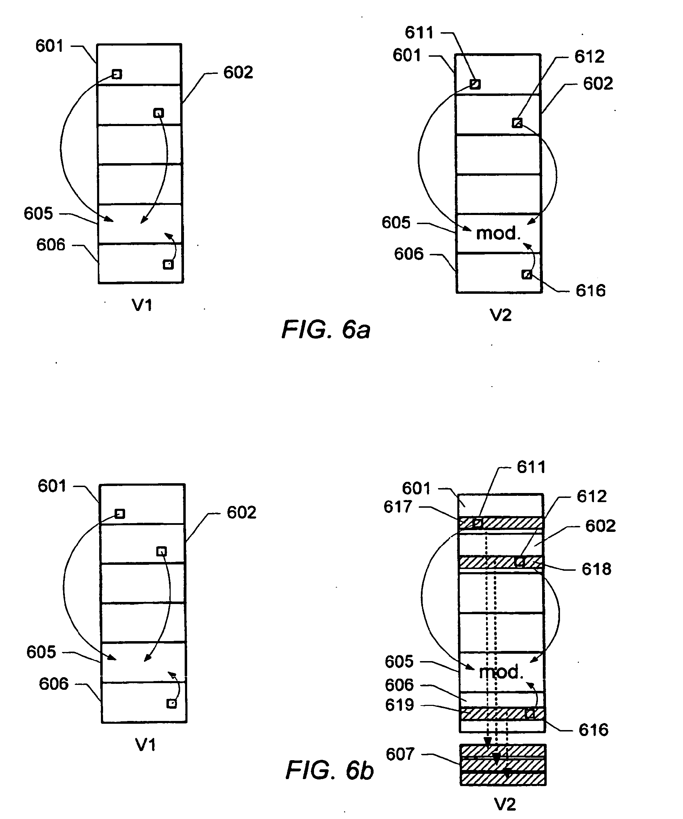

Figs. 6a-b illustrate an update of a version V1 of a software to a version V2 of a software.

Fig. 6a shows respective memory layouts of two versions of the same firmware designated V1 and V2, respectively, where version V2 is an update of version V1. In version V2, erase block 605 is modified and requires to be rewritten. However, since the code present in this block is referenced from code located in blocks 601, 602, and 606 (as indicated by arrows in fig. 6a), these blocks need to be updated as well such that the references 611, 612, and 613 point to the correct positions in the updated block 605. This is an example of so-called secondary effects, i.e. changes in one erase block causing changes in another erase block, even though the other erase block may not need to be changed otherwise. Erase blocks of flash memory do not support byte level modification and need to be completely rewritten, even if only a single byte has changed. Since the required modifications 611, 612, and 616 are very small, it would be desirable to avoid rewriting an entire erase block. A solution to this problem is illustrated in Fig. 6b, which shows the same software versions V1 and V2, but where all the updated references from block 601, 602, and 606 are stored in a separate erase block 607, and the MMU of the target device is used to map the logical address space to the physical one.

The remapping illustrated in fig. 6b may be achieved by updating the MMU page table to redirect the MMU pages 617, 618, and 619 that contain the updates 611, 612, and 616, respectively. The size of an MMU page is typically much smaller than the size of an erase block, and this allows the process to perform a much more fine-grained update.

Hence, embodiments of the method described herein utilize memory mapping to avoid updating erase blocks with updates due to secondary effects. The dashed arrows in fig. 6b illustrate the memory remapping in the updated version V2. The memory pages 617, 618, and 619 in the MMU that contain the updated references are remapped to new physical locations 620, 621, and 622, respectively, in memory. In this example, erase block 607 contains all the updated references. In the example of fig. 6b, only two erase blocks (blocks 605 and 607) need updating compared to the standard case of fig. 6a, where four erase blocks were affected.

As described above, the MMU of a processing device may be used to speed up the application of a delta file on that device. In the following, embodiments of a method for generating a delta file that supports the use of the MMU of the target device will be described in more detail.

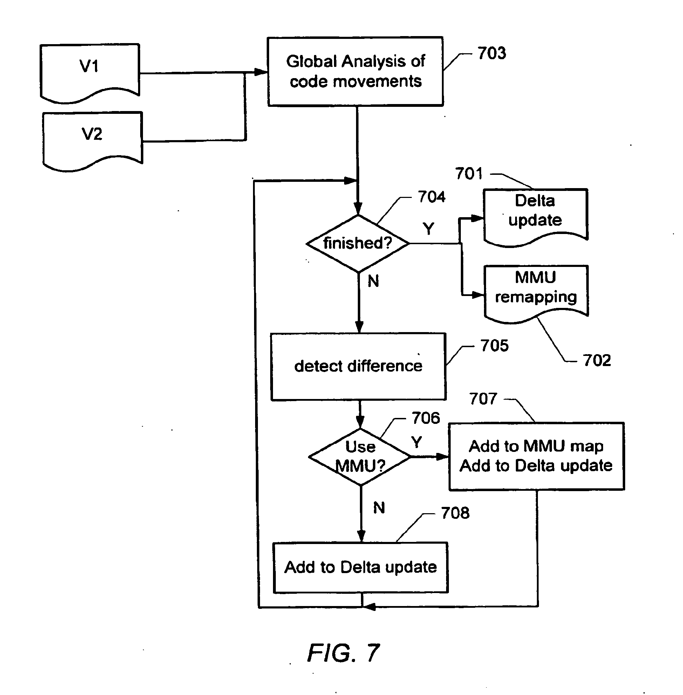

Fig. 7 shows a flow diagram of a process for generating a delta update package. As mentioned above, the update package generated by the process not only includes a delta update file 701, such as, a standard delta update file e.g. including add and copy commands, but also MMU remapping information 702, e.g. as a MMU remapping file or incorporated in the delta update file. The modified delta file thus supports the use of memory remapping in the target device to speed up the delta application, possibly at the cost of some extra memory requirements. The task of the delta generator described herein includes the creation of the MMU map file 702 in parallel with the standard delta update file 701. Since overly extensive use of memory remapping may lead to unacceptable memory requirements, the tasks of the delta generator may include making a trade off between performing an update in-place on the one hand, and writing the update to a new block and remap it using the MMU on the other hand. Such a trade-off may be achieved by a number of techniques. One approach may include the collection and writing of secondary effects (changes due to references to modified code) to a separate block, while actual changes to the code are applied in-place. The logical address space remains fixed, while the physical memory may be changed using modifications to the MMU table.

For example, in the updated version shown in Fig. 5c there is a gap 501 in the image as a consequence of optimizing for update speed. In this case, block B3 is rewritten once, and it only partially occupied by a part of module D. Thus, the remainder of block B3 may be used to write data. For example, references to moved code can be updated and written to this space and remapped using the MMU.

The process of fig. 7 receives the current version (V1) and the updated version (V2) and initially performs a global analysis (step 703), during which the process analyses the characteristics of the differences of the two versions so as to detect shrunk or grown modules, modules that are added or removed, modules that are relocated, possible domino effects, etc. The global analysis may show which erase blocks are likely to require in-place updates, blocks that are freed up, etc. The information obtained during this analysis is used in order to determine, for example, which erase blocks require rewriting, which blocks remain unchanged, and which blocks that may optionally be rewritten or remapped. Given this information the actual delta generation process takes place in steps 704-708. Accordingly, after the global analysis the delta generator processes the two versions difference by difference and determines for the individual differences whether or not the MMU should be used to remap the difference in order to avoid touching the erase block. For example, this determination may be based on one or more predetermined optimization criteria.

In particular, in step 704 the process determines whether there are still unprocessed differences. If this is the case, the process proceeds at step 705; otherwise the process outputs the generated delta update file 701 and the MMU remapping information 702, and terminates.

In step 705, the process identifies the next unprocessed difference between the current version V1 and the updated version V2. In subsequent step 706, the process determines, based on the results of the global code analysis 703, whether to update the erase block affected by the detected difference or to use the MMU to remap the changed code to a new physical location.

Accordingly, the process either proceeds at step 708 and adds suitable update instructions to the delta file for updating the affected erase block, or the process proceeds at step 707 and adds suitable update instructions to the delta file and generates suitable MMU mapping information for remapping the updated code. In both cases, the process subsequently returns to step 704 and processes the next difference, if any.

It will be understood that, in some embodiments, the process always uses the MMU to remap the changed code to a new physical location, i.e. the process may skip step 706 and always perform step 707.

In the following, three different embodiments of the overall process of fig. 7 will be described in greater detail. The embodiments differ in complexity of implementation, in memory requirement, and in the time required to perform the update. Consequently, the overall process of fig. 7 allows a selection of different specific embodiments so as to optimize the process for different criteria.

Given a sufficient amount of flash memory, the number of reflashed erase blocks (and the time required by the update) may be minimized or at least reduced by the following strategy: If M pages are modified between the installed and the updated versions of the image and each erase block consists of P pages, the availability of $B = \lceil M / P \rceil$ additional erase blocks ensures optimality. The first embodiment is based on this observation. This embodiment is particularly well-suited in connection with a feedback-linker scheme or another method for reducing the amount of differences between the current and the updated version.

The second embodiment produces an incremental update with the same number, B, of reflashed erase blocks without necessarily requiring an extra footprint of B erase blocks. This is achieved by reusing erase blocks that were previously occupied by the installed version of the image, once all the parts of the installed version of the erase block that are needed for the updated version have been copied.

The order in which the updated pages are created determines when the erase blocks of the original image can be reused. The updated pages are stored in a suitable location. The update can be performed in a failsafe manner, when an erase block of the original image is not reused until all pages that depend on the block have been written to flash memory. Unless the erase blocks can be recycled sufficiently rapidly, there is thus an overhead in memory usage. The second embodiment aims at minimizing the extra footprint while reflashing no more than B erase blocks.

The third embodiment makes a trade-off between memory requirement and update time. Unlike the other two embodiments, it evaluates recycling of nonempty erase blocks. The used pages within a block which is to be reused are copied to a new block. This compacts the updated image but has an overhead with respect to the number of reflashed erase blocks (downtime).

Embodiment 1:

As is shown in Fig. 7 above, the process receives an updated image V2 in addition to the currently "installed" image V1. For the purpose of the present description it will not be assumed that the process can affect the layout of the updated image in the logical address space. However, in some embodiments this may be the case, e.g. by using a feedback linker as mentioned above. Further, for the purpose of the present description, it is assumed that the process determines in an initial step (e.g. the global analysis 703 of code movements shown in fig. 7) the block moves which specify the parts of the installed image that are to be copied to the updated one. A block move represents a nonempty, common substring of the current and the updated version, and may be represented by respective starting positions and the length of the common substring. For example, this determination may be performed using known delta techniques, e.g. as disclosed in the article "Delta Storage for Arbitrary Non-Text Files" by Christoph Reichenberger, Proceedings of the 3rd international workshop on Software configuration management, Trondheim, Norway, p. 144 - 152, ACM press, 1991; and the documents cited therein, e.g. the article "The String-to-String Correction Problem with Block Move" by W. F. Tichy, ACM transactions on Computer Systems, Vol. 2, No. 4, November 1984.

Hence, during the global analysis step 703, the process detects the memory pages that have been modified from V1 to V2. In this embodiment, the process excludes unmodified pages from the incremental update, i.e. the erase block to which the page belongs is left as is and the entry corresponding to this page in the page table is also left unmodified.

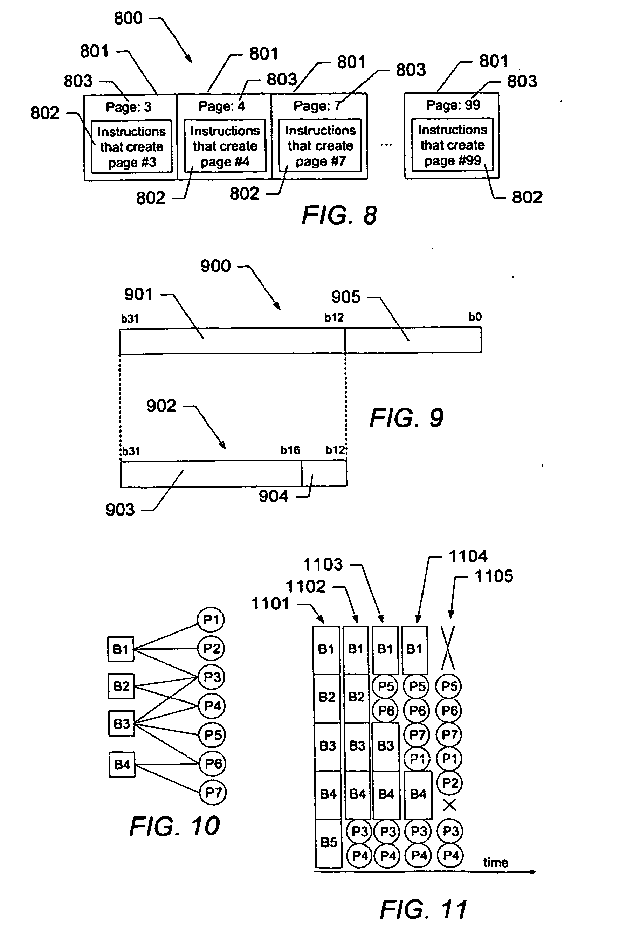

For each modified page, the process generates a section 801 of the delta file 800 as illustrated in fig. 8. The actual content of the section may include copy- and add instructions 802 known as such in the art. The instructions are derived from the block moves found in the global analysis. However, since the unmodified pages are excluded from the update, the instructions of each section are prefixed by the corresponding page number 803, e.g. as shown in fig. 8.

When the update is small in terms of modified pages, there is typically unused memory available in the device for storing the updated pages. Applying the delta file 800 of fig. 8 by the target device thus includes writing to the new erase blocks, each of which has room for P pages, and updating the page table. Since the page numbers of the modified pages are given in the delta file, the target device can update corresponding entries of the page table to the corresponding new physical addresses to which the target device has written the respective updated pages.

Fig. 9 illustrates an example of a logical address 900 to a location in a 4Kbyte large page where the 20 most significant bits 901 of a 32-bit logical address 900 form the page number (i.e. the index into the page table), while the remaining 12 bits 905 correspond to the offset within the page. Address translation provides the corresponding 20 bits 902 of the physical address (i.e. the entry in the page table). Assuming 64 kbyte erase blocks, 16 bits 903 come from the physical address of the erase block and the remaining four bits 904 specify the location of the page within the block.

It is interesting to note that the process of the present embodiment is optimal in the sense that it updates M modified pages of memory by reflashing only B = ⌈M / P⌉ erase blocks.

The process according to embodiment 1 may thus be summarised as writing modified pages to new blocks, without reusing erase blocks of the installed image. The process includes the steps of:

Step 1: Performing a global analysis of code movements (e.g. using known techniques), as described above.

Step 2: For each page p of the updated image V2 perform step 3.

Step 3: Unless page p is identical to that of the installed image V1, generate a section of the delta file that specifies the creation of the updated page.

Embodiment 2:

The second embodiment provides improved memory requirements compared to the first embodiment. This is achieved by reusing the erase blocks which store the original image when creating the updated image. The process does so without sacrificing the optimality in terms of the number of reflashed erase blocks. The second embodiment differs from the first one in the order in which the pages are created and in the selection of the erase block to which the new pages are written. The process of the second embodiment expresses the order of the pages in the delta file, e.g. as illustrated in Fig. 8. Additionally, the process provides an additional section in the delta file that specifies the sequence of erase blocks to use for the update.

As described above, the process receives the current and the updated image V1 and V2 and performs an initial global analysis step. During this analysis, the process identifies the modified pages of V2 and the pages of V1 which are required to create the updated pages. The process further receives information about the physical layout of pages in V1 (e.g. from information stored in the image repository during an initial installation process of a previous update process). Based on this information, the process determines the relation between the erase blocks of V1 and the pages of V2. In particular for each modified page, the process determines information about which erase block(s) are used for the generation of the corresponding updated page. Thus for each modified page, the dependency relation may be represented by a dependency list of erase blocks whose contents are used for the generation of the corresponding updated page. The dependency relations for a number of pages may be represented as a bipartite graph, an example of which is illustrated in fig. 10.

Fig. 10 illustrates the relation between the erase blocks B1-B4 of an example of an installed image and the pages P1-P7 of an example of an updated image. The erase blocks B1-B4 and the pages P1-P7 are represented as nodes of a bipartite graph. Each edge of the graph connecting a page node with a block node indicates that contents of the corresponding block are used for the generation of the corresponding updated page. For example, in fig. 9 pages P1, P2 and P3 are created using source material from block B1 (page P3 also requires contents of blocks B2 and B3).

Before an erase block is reused, the process applying the delta file creates all the pages that contain content of that block. Since the updated pages have to be stored somewhere, the process may have to start by using one or several empty erase blocks that are not currently occupied by the original image. Once the update process is done with the first original erase block, this erase block can be "recycled," i.e. used later for storing other pages. During the course of the update process, additional empty erase blocks may be required and additional erase blocks, which were occupied by the original image, may be recycled.

An example of the process when performed for the example shown in fig. 10 is illustrated in fig. 11. Fig. 11 shows the content of the memory blocks B1-B5 at different steps of the update process. The first step 1101 shows the current image occupying blocks B1-B4 of blocks B1-B5. The update process generates the updated image 1105 where updated pages P1-P7 at least partially occupy blocks B2-B5, while B1 is unused. Fig. 11 further shows intermediate steps 1102-1104 of the process.

As can be seen from fig. 11, the order in which the pages are created affects the memory requirement of the update. In this example, the update involves five erase blocks B1-B5, but only four erase blocks (B2-B5) are reflashed. In an initial step 1102, pages P3 and P4 are created in block B5. In subsequent step 1103, B2 is "recycled", since B2 only is needed for P3 and P4 (see fig. 10). Accordingly, pages P5 and P6 are stored in erase block B2, after which B3 can be "recycled". The process then proceeds by storing P7 and P1 in block B3 (step 1104) and, finally, P2 is stored in B4, resulting in the updated image 1105. After the update, four blocks (B2-B5) are (at least partly) occupied.

It is interesting to note that, in this case, prior art techniques (in-place application) would make backup copies of each erase block, which would double the downtime.

In order to support the above delta application, the delta generation process determines an order in which the pages of V2 can be created. In some embodiments, the delta generation process determines an order such that the required number of reflashed erase blocks is reduced, or even minimal, i.e. B = ⌈M / P ⌉, and the required footprint (number of erase blocks) is as small as possible.

Optimality in terms of the number of reflashed erase blocks is achieved by only reusing erase blocks without unmodified pages, i.e. erase blocks whose entire contents are updated to other locations. Just as for the first embodiment, the process may need exactly B erase blocks for the modified pages. Unless the process can recycle blocks of the original image, the process may have to make use of new erase blocks. The process according to the second embodiment is heuristic in that it makes an attempt to minimize the number of additional erase blocks needed, though without necessarily guaranteeing optimality. In this embodiment, the heuristic selects an erase block from V1 that includes content for the creation of a minimal number of dependent pages in V2 that remain to be created. In particular, this means that the process may start by recycling possible erase blocks whose contents are not used in the update.

Hence the second embodiment of the process provides a reduction of the memory requirement by recycling of erase blocks, and it includes the following steps:

Step 1: Perform a global analysis of code movements (e.g. using known techniques) as described above.

Step 2: Construct an explicit representation of the relation between the erase blocks of V1 and the pages of V2, e.g. by creating a data structure representing a bipartite graph as described above. Among the erase blocks, the process only includes those that are candidates for a complete reuse (i.e. do not include any unmodified pages) and among the pages, the process only includes the modified ones.

Step 3: Determine a sequence of B erase blocks to be used for the update, and the sequence, in which the M modified pages are created, by repeating

(a) through (d) until B erase blocks have been allocated or no candidates for recycling remain:

a) Heuristically select an erase block, b, of V1, e.g. as described above.
b) Append the pages, which depend on b for their creation, and that have not yet been added to the sequence of created pages to the sequence of created pages.
c) While the available space for pages (P times the number of allocated erase blocks) is less than the required number of created pages: Append a previously unused erase block to the sequence of allocated erase blocks.
d) Recycle the erase block b by adding it at the end of the sequence of allocated erase blocks.

Step 4: While the number of allocated blocks is less than B, add a previously unused erase block to the sequence of allocated erase blocks.

Step 5: Append the remaining modified pages of V2 to the sequence of created pages.

Step 6: Output the sequence, in which the erase blocks are allocated, to the delta file.

Step 7: Traverse the sequence of pages and generate the corresponding sections of the delta file.

Embodiment 3:

The third embodiment is a variation of the second embodiment. It differs from the second embodiment in that it trades update time for a smaller footprint. Rather than just recycling erase blocks that contain only modified pages, it also considers the recycling of erase blocks that include unmodified pages. The resulting process is very similar to the process of the second embodiment, but there are the following differences:

- In step 2, the process includes all blocks -including the ones with unmodified pages. The unmodified pages are however not added to the relation that is created in step 2. Instead, the process explicitly keeps track of the unmodified pages of each erase block.
- In step 3, the process does not know B, i.e. the number of required erase blocks, a priori. Thus, the process starts by assuming that only the modified pages will require space. When a block with unmodified pages is selected in step 3(a), B is updated so that there is space also for the unmodified pages.
- The heuristic in step 3(a) may be adapted so that not only the space requirement of the dependent pages, but also the amount of space made available by recycling the block is considered, e.g. by selecting an erase block with a minimal sum of the number of remaining dependent pages plus the number of unmodified pages.
- In step 3(b) not only the dependent pages, but also the unmodified pages of the erase block, are added to the sequence of created pages.

Hence, in the above, embodiments of methods, systems and devices have been described for generating a delta file that is suitable for an incremental update scheme based on address translation, which in turn reduces the time required for an update. The downtime of the device during an update is often dominated by the erase and write operations. This means that the downtime is effectively reduced by reducing the number of modified erase blocks. In particular, the practice used in prior art systems of making backup copies of erase blocks is avoided.

Embodiments disclosed herein provide an incremental update scheme which utilizes a memory management unit (MMU) when applying incremental updates. A distinction is made between the logical address space and the physical address space. Since references are expressed in logical addresses, the physical address of a particular piece of code has no impact on the effect of the program. Rather than making back-up copies of erase blocks, it is possible to install the updated code at a physical address that is different from its original location. By also updating the page table, that controls the operation of the MMU, the updated code is mapped to the appropriate logical address.

Address translation allows the process to update the flash memory at the resolution of a single page and to package the updated pages into erase blocks in any order.

Even though the embodiments disclosed herein have mainly been described in connection with MMU page tables, it will be appreciated that alternative embodiments may utilize other forms of redirection, e.g. software-based page tables, file system support provided by an operating system, e.g. by means of index blocks, and/or the like.

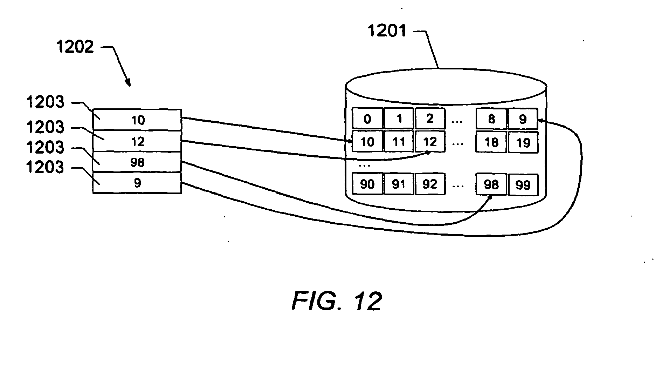

File-system support mechanisms by an operating system may rely on the same or similar kinds of indirection as provided by a page table in the embodiments described above. Fig. 12 illustrates a physical storage medium 1201 having data stored in blocks enumerated 1-99. In such an embodiment, the page table may be referred to as an index block 1202, and its entries 1203 may refer to blocks on a hard disk other storage medium 1201, as is illustrated in fig. 12. Thus, embodiments of the methods described herein may be applied to incremental updates of file-system images and/or incremental updates of individual files on the storage medium. As before, embodiments of the method described herein provide a reduction or even minimization of the number of block write operations.

For example, such an embodiment may be applied in connection with flash-memory-based file systems or other types of file systems, e.g. in order to limit the number of block writes for other storage media, such as hard disks.

Hence, the term page of memory content as used herein is intended to refer to any range of memory addressable by a suitable mechanism of indirection from a virtual or logical address to a physical location on the memory. The mechanism of indirection may utilise MMU page tables and/or other forms of redirection, e.g. software-based page tables, file system support provided by an operating system, e.g. by means of index blocks, and/or the like.

Thus, embodiments described herein provide a reduction of the time required for applying the update, since the contribution from secondary changes is reduced or even minimized.

Furthermore, embodiments of the method described herein allow for a much more fine-grained update using MMU pages as the smallest unit, rather than erase blocks.

Furthermore, since in embodiments of the method described herein the updates are not performed physically in-place, if the system is modular and if there are space available, it is possible to keep the system at least partially operational during the application of the update. The system updates will then be available when the MMU map is updated.

It is noted that the above embodiments have mainly been described in connection with software to be loaded into a processing device. However, it will be appreciated that the methods, devices, systems, and product means described herein may also be applied in connection with other types of data, such as constant data.

The method described herein can be implemented by means of hardware comprising several distinct elements, and by means of a suitably programmed computer. In the device claims enumerating several means, several of these means can be embodied by one and the same item of hardware, e.g. a suitably programmed microprocessor or computer, and/or one or more communications interfaces as described herein. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

**Claims**

1. A method of generating a delta update item (309) for updating memory content of a storage medium (212) of a processing device (101) from a current version (V1) to an updated version (V2) of the memory content, the storage medium being arranged to have stored the memory content organised as one or more memory sectors (B1-B6, 601-606), each sector having a predetermined sector size, the processing device being arranged to address the memory content stored on the storage medium as one or more pages of memory content (617-619), each page having a predetermined page size not larger than the sector size, and each page being mapped to a respective location in the storage medium, the method comprising:

a) determining a change of memory content in a first sector from the current version to the updated version;

b) determining at least a first page including said change, the first page being mapped to a memory location included in the first sector;

c) generating update instructions for causing the processing device to store updated memory content corresponding to the first page at a location in a second sector;

d) generating update instructions for causing the processing device to remap the first page to the location in the second sector;

e) creating a delta update item including the update instructions generated in steps c) and d).

2. A method according to claim 1, wherein the page size is smaller than the sector size.

3. A method according to claim 1 or 2, comprising:

- identifying all changes in memory content in the first sector;

- evaluating a predetermined condition for selecting performing an in-place update of the first sector;

- if the predetermined condition is fulfilled, generating update instructions for causing the processing device to store updated memory content corresponding to the first page in the first sector; otherwise performing steps c) and d).

4. A method according to claim 3, wherein evaluating comprises determining a total size of all pages included in the first sector that are determined to include respective changes from the current version to the updated version; and wherein the predetermined condition is fulfilled if said total size is larger than a predetermined threshold.

5. A method according to claim 3, wherein evaluating comprises determining whether the identified changes are secondary effects caused by changes in other sectors, and wherein the predetermined condition is fulfilled if the identified changes include further changes in addition to the secondary effects.

6. A method according to any one of claims 1 through 5, comprising:

- identifying all pages that include respective changes of memory content;

- for each identified page generating a group of delta update instructions, the group including update instructions for causing the processing device to generate updated memory content corresponding to said identified page, and a page number identifier causing the processing device to update mapping information for said identified page.

7. A method according to any one of claims 1 through 6, further comprising:

- for each page that includes a change in memory content, determining a dependency list of sectors referenced by the update instructions for generating updated memory content corresponding to said page;

- determining, from the determined dependency lists, a sequential order of generation steps for generating the updated memory pages;

- generating update instructions for causing the processing device to generate updated memory content in the determined sequential order of generation steps.

8. A method according to claim 7, further comprising:

- determining, from at least the determined dependency lists, a sequential order of target sectors for receiving the updated memory content;

- generating update instructions for causing the processing device to generate updated memory content in the determined sequential order of generation steps and to store the updated memory content in the target sectors according to the determined sequential order of target sectors.

9. A method according to claim 8, comprising:

- constructing a representation of a dependency relation between the sectors including the current version of memory content and the pages including the updated memory content;

- determining a first sequence of sectors to be used for storing the updated memory content, and a second sequence of modified pages indicative of a sequential order of generation of the memory content of the modified pages are created;

- including information about the first sequence in the update instructions;

- processing the second sequence of pages and generating corresponding update instructions for generating updated memory content in a sequential order determined by said second sequence.

10. A method according to claim 9, wherein determining the first and second sequence comprises the following steps:

(i) selecting a first sector from a list of unprocessed sectors according to a predetermined selection criterion, the first sector including at least a part of the current memory content;

(ii) appending to the second sequence all pages whose updated memory content depend for its generation on the current memory content stored in the first sector and that have not yet been added to the second sequence;

(iii) if a total size of the pages of the second sequence exceeds a total size of sectors of the first sequence, appending one or more previously unused sectors to the first sequence such that the total size of sectors of the first sequence is no smaller than the total size of pages of the second sequence;

(iv) appending the first sector to the first sequence;

(v) repeating steps (i) through (iv) until either the total size of sectors of the first sequence is large enough to accommodate the updated version of memory content or until no unprocessed sector fulfils the predetermined selection criterion;

(vi) if the total size of sectors of the first sequence is too small to accommodate the updated version of memory content, appending one or more previously unused sectors to the first sequence;

(vii) appending remaining modified pages, if any, to the second sequence.

11. A method according to claim 10, wherein selecting the first sector includes selecting a sector having a dependency relation to a smallest number of pages.

12. A method according to claim 10 or 11, wherein the list of unprocessed sectors consist of sectors that only include modified pages.

13. A method according to claim 10 or 11, wherein the list of unprocessed sectors includes sectors that include unmodified pages.

14. A method according to claim 13, wherein selecting the first sector includes selecting a sector having a smallest sum of the number of modified pages dependant on said sector and the number of unmodified pages included in the said sector.

15. A method according to any one of claims 1 through 14, wherein the processing device is adapted to access the data stored in the storage medium under control of a memory management unit adapted to organize the data as memory pages of data in a virtual memory space; and to map pages of the virtual memory space to physical addresses of the storage medium.

16. A method according to claim 15, wherein the memory management unit is adapted to map the pages of the virtual memory space by means of a mapping table including mapping information between virtual memory pages and physical memory addresses in the storage medium; and wherein generating instructions for causing the processing device to remap the first page to the location in the second sector includes generating an updated page table.

17. A method according to any one of claims 1 through 16, further comprising generating instructions for causing the processing device to store in the second sector updated memory content of a plurality of pages determined to include respective changes.

18. A method of updating memory content of a storage medium (212) of a processing device (101) from a current version (V1) to an updated version (V2) of the memory content, the storage medium being arranged to have stored the memory content organised as one or more memory sectors (B1-B6, 601-606), each sector having a predetermined sector size, the processing device being arranged to address the memory content stored on the storage medium as one or more pages of memory content (617-619), each page having a predetermined page size not larger than the sector size, and each page being mapped to a respective location in the storage medium, the method comprising:

   - receiving a delta update item including update instructions for causing the processing device to update a current memory content stored in the storage medium to an updated memory content,
   - storing, responsive to the received update instructions, updated memory content corresponding to a first page at a location in a second sector, wherein the current version of the first page is mapped to a location in a first sector of the storage medium, and wherein the first page includes a change of memory content from the current version to the updated version; and
   - remapping, responsive to the received update instructions, the first page to the location in the second sector.

19. A method according to claim 18; wherein storing includes

   - reading current memory content from the first sector;
   - generating the updated memory content from the read current memory content and the received update instructions; and
   - directly storing the generated updated memory content to the second sector.

**20.** A processing device (101) comprising a storage medium (212), the storage medium being arranged to have stored thereon memory content organised as one or more memory sectors (B1-B6, 601-606), each sector having a predetermined sector size, the processing device being arranged to address the memory content stored on the storage medium as one or more pages of memory content (617, 619), each page having a predetermined page size not larger than the sector size, and each page being mapped to a respective location in the storage medium, the processing device being configured

- to receive a delta update item (309) including update instructions for causing the processing device to update a current memory content stored in the storage medium to an updated memory content;
- to store, responsive to the received update instructions, updated memory content corresponding to a first page at a location in a second sector, wherein the current version of the first page is mapped to a location in a first sector of the storage medium, and wherein the first page includes a change of memory content from the current version (V1) to the updated version (V2); and
- to remap, responsive to the received update instructions, the first page to the location in the second sector.

**21.** A processing device according to claim 20, wherein the page size is smaller than the sector size.

**22.** A processing device according to claim 20 or 21, wherein the storage medium is a non-volatile storage medium.

**23.** A processing device according to any one of claims 20 through 22, wherein the storage medium is a flash memory.

**24.** A processing device according to claim 23, wherein the flash memory is a NAND memory.

**25.** A processing device according to claim 23, wherein the flash memory is a NOR memory.

**26.** A processing device according to any one of claims 20 through 25, further comprising a memory management unit for controlling access to the storage medium by the processing device; wherein the memory management unit is adapted to organize data as pages of data in a virtual memory space, each page having a predetermined page size, and wherein the memory management unit is adapted to map pages of the virtual memory space to physical addresses of the storage medium.

**27.** A data processing system for generating a memory image including data for storage in a storage medium (212) of a processing device (101), the data processing system being configured to perform the steps of the method according to any one of claims 1 through 17.

**28.** A computer program comprising program code means adapted to cause, when executed by a processing device including a storage medium (212), the processing device (101) to perform the steps of the method according to claim 18 or 19.

**29.** A computer program comprising program code means adapted to cause, when executed by a data processing system, the data processing system to perform the steps of the method according to any one of claims 1 through 17.

**30.** A data carrier comprising computer readable update instructions for causing, when processed by a processing device (101), the processing device to update memory content of a storage medium (212) of the processing device from a current version (V1) to an updated version (V2) of the memory content, the storage medium being arranged to have stored the memory content organised as one or more memory sectors (B1-B6, 601-606), each sector having a predetermined sector size, the processing device being arranged to address the memory content stored on the storage medium as one or more pages of memory content (617-619), each page having a predetermined page size not larger than the sector size, and each page being mapped to a respective location in the storage medium, the computer readable update instructions comprising:

- update instructions for causing the processing device to store updated memory content corresponding to a first page at a location in a second sector, wherein the current version of the first page is mapped to a location in a first sector of the storage medium, and wherein the first page includes a change of memory content from the current version to the updated version; and
- update instructions for causing the processing device to remap the first page to the location in the second sector.

**Patentansprüche**

**1.** Verfahren zum Erzeugen eines Änderungsaktualisierungselementes (309) zum Aktualisieren eines Speicherinhaltes eines Speichermediums (212) einer Verarbeitungseinrichtung (101) von einer bestehenden Version (V1) zu einer aktualisierten Version (V2) des Speicherinhaltes, wobei das Speichermedium so eingerichtet ist, dass es den Speicherinhalt organisiert als einen oder mehrere Speichersektor (en) (B1-B6, 601 - 606) gespeichert hat, wobei jeder Sektor eine vorbestimmte Sektorgröße aufweist, wobei die Verarbeitungseinrichtung dazu eingerichtet ist, den im Speichermedium gespeicherten Speicherinhalt als eine oder mehrere Seite(n) des Speicherinhaltes (617 - 619) zu adressieren, wobei jede Seite eine vorbestimmte Seitengröße aufweist, die nicht größer als die Sektorgröße ist, und wobei jede Seite einem entsprechenden Ort im Speichermedium zugewiesen ist, wobei das Verfahren Folgendes umfasst:

a) Bestimmen einer Änderung des Speicherinhaltes in einem ersten Sektor von der bestehenden Version zur aktualisierten Version;
b) Bestimmen zumindest einer ersten Seite, die die Änderung aufweist, wobei die erste Seite einem Speicherort zugewiesen ist, der vom ersten Sektor umfasst ist;
c) Erzeugen von Aktualisierungsanweisungen, mit denen die Verarbeitungseinrichtung veranlasst wird, den aktualisierten Speicherinhalt, der der ersten Seite entspricht, an einem Ort in einem zweiten Sektor zu speichern;
d) Erzeugen von Aktualisierungsanweisungen, mit denen die Verarbeitungseinrichtung veranlasst wird, die erste Seite dem Ort im zweiten Sektor neu zuzuweisen; und
e) Erzeugen eines Änderungsaktualisierungselementes, das die in den Schritten c) und d) erzeugten Aktualisierungsanweisungen aufweist.

2. Verfahren nach Anspruch 1, wobei die Seitengröße kleiner als die Sektorgröße ist.

3. Verfahren nach Anspruch 1 oder 2, aufweisend:

- Identifizieren aller Änderungen im Speicherinhalt im ersten Sektor;
- Bewerten einer vorbestimmten Bedingung zur Auswahl der Durchführung einer Aktualisierung des ersten Sektors an der gleichen Stelle;
- falls die vorbestimmte Bedingung erfüllt ist, Erzeugen von Aktualisierungsanweisungen, mit denen die Verarbeitungseinrichtung veranlasst wird, der ersten Seite entsprechenden aktualisierten Speicherinhalt im ersten Sektor zu speichern;
- anderenfalls Durchführen der Schritte c) und d).

4. Verfahren nach Anspruch 3, wobei das Bewerten das Bestimmen einer Gesamtgröße aller vom ersten Sektor umfassten Seiten aufweist, von denen bestimmt wird, dass sie entsprechende Änderungen von der bestehenden Version zur aktualisierten Version aufweisen; und wobei die vorbestimmte Bedingung erfüllt ist, falls die Gesamtgröße größer als ein vorbestimmter Schwellenwert ist.

5. Verfahren nach Anspruch 3, wobei das Bewerten das Bestimmen aufweist, ob die identifizierten Änderungen Sekundäreffekte sind, die durch Änderungen in anderen Sektoren verursacht werden, und wobei die vorbestimmte Bedingung erfüllt ist, falls die identifizierten Änderungen weitere Änderungen zusätzlich zu den Sekundäreffekten umfassen.

6. Verfahren nach einem der Ansprüche 1 bis 5, aufweisend:

- Identifizieren aller Seiten, die entsprechende Änderungen des Speicherinhaltes aufweisen;
- Erzeugen einer Gruppe von Änderungsaktualisierungsanweisungen für jede identifizierte Seite, wobei die Gruppe Aktualisierungsanweisungen, mit denen die Verarbeitungseinrichtung veranlasst wird, einem der identifizierten Seite entsprechenden aktualisierten Speicherinhalt zu erzeugen, und eine Seitennummerkennung aufweist, die die Verarbeitungseinrichtung veranlasst, Zuweisungsinformation für die identifizierte Seite zu aktualisieren.

7. Verfahren nach einem der Ansprüche 1 bis 6, ferner aufweisend:

- für jede Seite, die eine Änderung im Speicherinhalt aufweist, Bestimmen einer Abhängigkeitsliste von Sektoren, auf die die Aktualisierungsanweisungen verweisen, zum Erzeugen eines der Seite entsprechenden aktualisierten Speicherinhaltes;
- Bestimmen einer sequentiellen Reihenfolge von Erzeugungsschritten aus den bestimmten Abhängigkeitslisten zum Erzeugen der aktualisierten Speicherseiten; und
- Erzeugen von Aktualisierungsanweisungen, mit denen die Verarbeitungseinrichtung veranlasst wird, einen aktualisierten Speicherinhalt in der bestimmten sequentiellen Reihenfolge der Erzeugungsschritte zu erzeugen.

8. Verfahren nach Anspruch 7, ferner aufweisend:

- Bestimmen einer sequentiellen Reihenfolge von Zielsektoren aus zumindest den bestimmten Abhängigkeitslisten zum Erhalten des aktualisierten Speicherinhaltes;
- Erzeugen von Aktualisierungsanweisungen, mit denen die Verarbeitungseinrichtung veranlasst wird, einen aktualisierten Speicherinhalt in der bestimmten sequentiellen Reihenfolge der Erzeugungsschritte zu erzeugen und den aktualisierten Speicherinhalt in den Zielsektoren gemäß der bestimmten sequentiellen Reihenfolge der Zielsektoren zu speichern.

9. Verfahren nach Anspruch 8, aufweisend:

- Erstellen einer Darstellung eines Abhängigkeitsverhältnisses zwischen den die bestehende Version des Speicherinhaltes umfassenden Sektoren und den den aktualisierten Speicherinhalt umfassenden Seiten;
- Bestimmen einer ersten Sequenz von Sektoren, die zum Speichern des aktualisierten Speicherinhaltes zu verwenden sind, und eine zweite Sequenz modifizierter Seiten, die eine sequentielle Reihenfolge der Erzeugung des Speicherinhaltes der modifizierten Seiten anzeigen, wird erzeugt;
- Einfügen einer Information über die erste Sequenz in die Aktualisierungsanweisungen;
- Verarbeiten der zweiten Sequenz von Seiten und Erzeugen entsprechender Aktualisierungsanweisungen zum Erzeugen eines aktualisierten Speicherinhaltes in einer sequentiellen Reihenfolge, die durch die zweite Sequenz bestimmt wird.

10. Verfahren nach Anspruch 9, wobei das Bestimmen der ersten und der zweiten Sequenz die folgenden Schritte aufweist:

i) Auswählen eines ersten Sektors aus einer Liste unverarbeiteter Sektoren gemäß einem vorbestimmten Auswahlkriterium, wobei der erste Sektor zumindest einen Teil des bestehenden Speicherinhaltes umfasst;
ii) Anhängen der zweiten Sequenz aller Seiten, deren aktualisierter Speicherinhalt für sein Erzeugen vom bestehenden Speicherinhalt abhängt, der im ersten Sektor gespeichert ist und der noch nicht zur zweiten Sequenz hinzugefügt wurde;
iii) falls eine Gesamtgröße der Seiten der zweiten Sequenz eine Gesamtgröße der Sektoren der ersten Sequenz überschreitet, Hinzufügen eines oder mehrerer zuvor ungenutzte(n/r) Sektor(s/en) zur ersten Sequenz, so dass die Gesamtgröße der Sektoren der ersten Sequenz nicht kleiner ist als die Gesamtgröße der Seiten der zweiten Sequenz;
iv) Anhängen des ersten Sektors zur ersten Sequenz;
v) Wiederholen der Schritte i) bis iv), bis entweder die Gesamtgröße der Sektoren der ersten Sequenz groß genug ist, um die aktualisierte Version des Speicherinhaltes aufzunehmen, oder bis kein unverarbeiteter Sektor das vorbestimmte Auswahlkriterium erfüllt;
vi) falls die Gesamtgröße der Sektoren der ersten Sequenz zu klein ist, um die aktualisierte Version des Speicherinhaltes aufzunehmen, Anhängen eines oder mehrerer zuvor ungenutzter Sektoren zur ersten Sequenz; und
vii) Anhängen der verbleibenden modifizierten Seiten, falls solche vorhanden sind, zur zweiten Sequenz.

11. Verfahren nach Anspruch 10, wobei das Auswählen des ersten Sektors das Auswählen eines Sektors mit einer Abhängigkeitsbeziehung zur kleinsten Anzahl von Seiten umfasst.

12. Verfahren nach Anspruch 10 oder 11, wobei die Liste unverarbeiteter Sektoren aus Sektoren besteht, die lediglich geänderte Seiten aufweisen.

13. Verfahren nach Anspruch 10 oder 11, wobei die Liste unverarbeiteter Sektoren Sektoren umfasst, die nicht geänderte Seiten umfassen.

14. Verfahren nach Anspruch 13, wobei das Auswählen des ersten Sektors das Auswählen eines Sektors mit der kleinsten Summe der Anzahl modifizierter Seiten, die von dem Sektor abhängen, und der Anzahl nicht geänderter Seiten umfasst, die von dem Sektor umfasst sind.

15. Verfahren nach einem der Ansprüche 1 bis 14, wobei die Verarbeitungseinrichtung dazu ausgebildet ist, auf in dem Speichermedium gespeicherte Daten unter Steuerung einer Speicherverwaltungseinheit zuzugreifen, die dazu ausgebildet ist, die Daten als Speicherseiten von Daten in einem virtuellen Speicherraum zu organisieren, und um die Seiten des virtuellen Speicherraumes physikalischen Adressen des Speichermediums zuzuweisen.

16. Verfahren nach Anspruch 15, wobei die Speicherverwaltungseinheit dazu ausgebildet ist, die Seiten des virtuellen Speicherraumes mittels einer Zuweisungstabelle zuzuweisen, die Zuweisungsinformationen zwischen den virtuellen Speicherseiten und den physikalischen Speicheradressen im Speichermedium aufweist; und wobei das Erzeugen der Anweisungen, mit denen die Verarbeitungseinrichtung veranlasst wird, die erste Seite dem Ort im zweiten Sektor neu zuweisen, das Erzeugen einer aktualisierten Seitentabelle aufweist.

17. Verfahren nach einem der Ansprüche 1 bis 16, ferner aufweisend das Erzeugen von Anweisungen, um die Verarbeitungseinrichtung zu veranlassen, im zweiten Sektor einen aktualisierten Speicherinhalt einer Mehrzahl von Seiten zu speichern, bei denen bestimmt wurde, dass sie entsprechende Änderungen aufweisen.

18. Verfahren zum Aktualisieren eines Speicherinhaltes eines Speichermediums (212) einer Verarbeitungseinrichtung (101) von einer bestehenden Version (V1) zu einer aktualisierten Version (V2) des Speicherinhaltes, wobei das Speichermedium dazu eingerichtet ist, den Speicherinhalt organisiert als einen oder mehrere Sektor(en) (B1

- B6, 601 - 606) zu speichern, wobei jeder Sektor eine vorbestimmte Sektorgröße aufweist, wobei die Verarbeitungseinrichtung dazu eingerichtet ist, den im Speichermedium gespeicherten Speicherinhalt als eine oder mehrere Seite(n) des Speicherinhaltes (617 - 619) zu adressieren, wobei jede Seite eine vorbestimmte Seitengröße aufweist, die nicht größer als die Sektorgröße ist, und wobei jede Seite einem entsprechenden Ort im Speichermedium zugewiesen ist, wobei das Verfahren Folgendes umfasst:

- Empfangen eines Änderungsaktualisierungselementes, das Aktualisierungsanweisungen aufweist, mit denen die Verarbeitungseinrichtung veranlasst wird, einen im Speichermedium gespeicherten bestehenden Speicherinhalt zu einem aktualisierten Speicherinhalt zu aktualisieren;
- Speichern, in Reaktion auf die empfangenen Aktualisierungsanweisungen, eines aktualisierten Speicherinhaltes, der einer ersten Seite an einem Ort in einem zweiten Sektor entspricht, wobei die bestehende Version der ersten Seite einem Ort in einem ersten Sektors des Speichermediums zugewiesen wird und wobei die erste Seite eine Änderung eines Speicherinhaltes von der bestehenden Version zur aktualisierten Version aufweist; und

- Neuzuweisen, in Reaktion auf die empfangenen Aktualisierungsanweisungen, der ersten Seite zu dem Ort im zweiten Sektor.

19. Verfahren nach Anspruch 18, wobei das Speichern aufweist:

- Lesen des bestehenden Speicherinhaltes aus dem ersten Sektor;
- Erzeugen des aktualisierten Speicherinhaltes aus dem ausgelesenen bestehenden Speicherinhalt und den erhaltenen Aktualisierungsanweisungen; und
- direktes Speichern des erzeugten aktualisierten Speicherinhaltes im zweiten Sektor.

20. Verarbeitungseinrichtung (101) mit einem Speichermedium (212), wobei das Speichermedium dazu eingerichtet ist, dass darauf ein Speicherinhalt gespeichert wird, der als ein oder mehrere Speichersektor(en) (B1 - B6, 601 - 606) organisiert ist, wobei jeder Sektor eine vorbestimmte Sektorgröße aufweist, wobei die Verarbeitungseinrichtung dazu eingerichtet ist, den auf dem Speichermedium gespeicherten Speicherinhalt als eine oder mehrere Seite (n) des Speicherinhalts (617

- 619) zu adressieren, wobei jede Seite eine vorbestimmte Seitengröße nicht größer als die Sektorgröße aufweist und wobei jede Seite einem entsprechenden Ort im Speichermedium zugewiesen ist, wobei die Verarbeitungseinrichtung dazu ausgestaltet ist, dass sie

- ein Änderungsaktualisierungselement (309) empfängt, das Aktualisierungsanweisungen aufweist, mit denen die Bearbeitungseinrichtung veranlasst wird, einen im Speichermedium gespeicherten bestehenden Speicherinhalt zu einem aktualisierten Speicherinhalt zu aktualisieren;
- in Reaktion auf die empfangenen Aktualisierungsanweisungen den aktualisierten Speicherinhalt zu speichern, der einer ersten Seite an einem Ort in einem zweiten Sektor entspricht, wobei die bestehende Version der ersten Seite einem Ort in einem ersten Sektor des Speichermediums zugewiesen ist und wobei die erste Seite eine Änderung des Speicherinhaltes von der bestehenden Version (V1) zur aktualisierten Version (V2) aufweist; und
- in Reaktion auf die empfangenen Aktualisierungsanweisungen die erste Seite dem Ort im zweiten Sektor neu zuweist.

21. Verarbeitungseinrichtung nach Anspruch 20, wobei die Seitengröße kleiner als die Sektorgröße ist.

22. Verarbeitungseinrichtung nach Anspruch 20 oder 21, wobei das Speichermedium ein nichtflüchtiges Speichermedium ist.

23. Verarbeitungseinrichtung nach einem der Ansprüche 20 bis 22, wobei das Speichermedium ein Flash-Speicher ist.

24. Verarbeitungseinrichtung nach Anspruch 23, wobei der Flash-Speicher ein NAND-Speicher ist.

25. Verarbeitungseinrichtung nach Anspruch 23, wobei der Flash-Speicher ein NOR-Speicher ist.

**26.** Verarbeitungseinrichtung nach einem der Ansprüche 20 bis 25, ferner aufweisend eine Speicherverwaltungseinheit zum Steuern des Zugriffs auf das Speichermedium durch die Verarbeitungseinrichtung, wobei die Speicherverwaltungseinheit dazu ausgebildet ist, Daten als Seiten von Daten in einem virtuellen Speicherraum zu organisieren, wobei jede Seite eine vorbestimmte Seitengröße aufweist und wobei die Speicherverwaltungseinheit dazu ausgebildet ist, die Seiten des virtuellen Speicherraumes physikalischen Adressen des Speichermediums zuzuweisen.

**27.** Datenverarbeitungssystem zum Erzeugen eines Speicherabbildes, das Daten zum Speichern in einem Speichermedium (212) einer Verarbeitungseinrichtung (101) aufweist, wobei das Datenverarbeitungssystem dazu ausgestaltet ist, die Schritte des Verfahrens nach einem der Ansprüche 1 bis 17 durchzuführen.

**28.** Computerprogramm mit Programmcodemitteln, die dazu ausgebildet sind, zu bewirken, wenn sie auf einer Verarbeitungseinrichtung mit einem Speichermedium (212) ausgeführt werden, dass die Verarbeitungseinrichtung (101) die Schritte des Verfahrens nach Anspruch 18 oder 19 ausführt.

**29.** Computerprogramm mit Programmcodemitteln, die dazu ausgebildet sind, zu bewirken, wenn sie von einem Datenverarbeitungssystem ausgeführt werden, dass das Datenverarbeitungssystem die Schritte des Verfahrens nach einem der Ansprüche 1 bis 17 ausführt.

**30.** Datenträger mit computerlesbaren Aktualisierungsanweisungen zum Bewirken, wenn sie durch eine Verarbeitungseinrichtung (101) verarbeitet werden, dass die Verarbeitungseinrichtung den Speicherinhalt eines Speichermediums (212) der Verarbeitungseinrichtung von einer bestehenden Version (V1) zu einer aktualisierten Version (V2) des Speicherinhalts aktualisiert, wobei das Speichermedium dazu eingerichtet ist, dass ein Speicherinhalt gespeichert wird, der als ein oder mehrere Speichersektor (en) (B1 - B6; 601 - 606) organisiert ist, wobei jeder Sektor eine vorbestimmte Sektorgröße aufweist, wobei die Verarbeitungseinrichtung so eingerichtet ist, dass sie den auf dem Speichermedium gespeicherten Speicherinhalt als eine oder mehrere Seite(n) des Speicherinhaltes (617 - 619) adressiert, wobei jede Seite eine vorbestimmte Seitengröße nicht größer als die Sektorgröße aufweist und wobei jede Seite einem entsprechenden Ort im Speichermedium zugewiesen ist, wobei die computeriesbaren Aktualisierungsanweisungen Folgendes umfassen:

- Aktualisierungsanweisungen zum Veranlassen der Verarbeitungseinrichtung, einen aktualisierten Speicherinhalt zu speichern, der einer ersten Seite an einem Ort in einem zweiten Sektor entspricht, wobei die bestehende Version der ersten Seite einem Ort in einem ersten Sektor des Speichermediums zugewiesen ist und wobei die erste Seite eine Änderung des Speicherinhaltes von der bestehenden Version zur aktualisierten Version umfasst; und

- Aktualisierungsanweisungen zum Veranlassen der Verarbeitungseinrichtung, die erste Seite dem Ort im zweiten Sektor neu zuzuweisen.

**Revendications**

**1.** Procédé de génération d'un élément de mise à jour delta (309) pour mettre à jour un contenu de mémoire d'un support de mémorisation (212) d'un dispositif de traitement (101) d'une version actuelle (V1) à une version mise à jour (V2) du contenu de mémoire, le support de mémorisation étant configuré de façon à comporter, mémorisé, le contenu de mémoire organisé sous la forme d'un ou de plusieurs secteurs de mémoire (81 à 86, 601 à 606), chaque secteur ayant une taille de secteur prédéterminée, le dispositif de traitement étant configuré de façon à adresser le contenu de mémoire mémorisé sur le support de mémorisation sous la forme d'une ou de plusieurs pages de contenu de mémoire (617 à 619), chaque page ayant une taille de page prédéterminée non supérieure à la taille de secteur, et chaque page étant projetée vers un emplacement respectif dans le support de mémorisation, le procédé comprenant :

a) la détermination d'un changement de contenu de mémoire dans un premier secteur de la version actuelle à la version mise à jour ;
b) la détermination d'au moins une première page comprenant ledit changement, la première page étant projetée vers un emplacement de mémoire inclus dans le premier secteur ;
c) la génération d'instructions de mise à jour pour amener le dispositif de traitement à mémoriser un contenu de mémoire mis à jour correspondant à la première page en un emplacement dans un deuxième secteur ;
d) la génération d'instructions de mise à jour de façon à amener le dispositif de traitement à reprojeter la première page vers l'emplacement dans le deuxième secteur ;
e) la création d'un élément de mise à jour delta comprenant les instructions générées dans les étapes c) et d) .

**2.** Procédé selon la revendication 1, dans lequel la taille de page est inférieure à la taille de secteur.

**3.** Procédé selon la revendication 1 ou 2, comprenant :

- l'identification de tous les changements dans le contenu de mémoire dans le premier secteur ;
- l'évaluation d'une condition prédéterminée pour sélectionner la réalisation d'une mise à jour en place du premier secteur ;
- si la condition prédéterminée est remplie, la génération d'instructions de mise à jour pour amener le dispositif de traitement à mémoriser un contenu de mémoire mis à jour correspondant à la première page dans le premier secteur ; sinon, la réalisation des étapes c) et d).

**4.** Procédé selon la revendication 3, dans lequel l'évaluation comprend la détermination d'une taille totale de toutes les pages incluses dans le premier secteur qui sont déterminées comme comprenant des changements respectifs de la version actuelle à la version mise à jour ; et dans lequel la condition prédéterminée est remplie si ladite taille totale est supérieure à un seuil prédéterminé.

**5.** Procédé selon la revendication 3, dans lequel l'évaluation comprend la détermination du fait que les changements identifiés sont ou non des effets secondaires provoqués par des changements dans d'autres secteurs, et dans lequel la condition prédéterminée est remplie si les changements identifiés comprennent d'autres changements en plus des effets secondaires.

**6.** Procédé selon l'une quelconque des revendications 1 à 5, comprenant :

- l'identification de toutes les pages qui comprennent des changements respectifs de contenu de mémoire ;
- pour chaque page identifiée, la génération d'un groupe d'instructions de mise à jour delta, le groupe comprenant des instructions de mise à jour pour amener le dispositif de traitement à générer un contenu de mémoire mis à jour correspondant à ladite page identifiée, et un identificateur de numéro de page pour amener le dispositif de traitement à mettre à jour une information de projection pour ladite page identifiée.

**7.** Procédé selon l'une quelconque des revendications 1 à 6, comprenant de plus :

- pour chaque page qui comprend un changement de contenu de mémoire, la détermination d'une liste de dépendance de secteurs référencés par les instructions de mise à jour pour générer un contenu de mémoire mis à jour correspondant à ladite page ;
- la détermination, à partir des listes de dépendance déterminées, d'un ordre séquentiel d'étapes de génération pour générer les pages de mémoire mises à jour ;
- la génération d'instructions de mise à jour pour amener le dispositif de traitement à générer un contenu de mémoire mis à jour dans l'ordre séquentiel déterminé d'étapes de génération.

**8.** Procédé selon la revendication 7, comprenant de plus :

- la détermination, à partir d'au moins les listes de dépendance déterminées, d'un ordre séquentiel de secteurs cibles pour recevoir le contenu de mémoire mis à jour ;
- la génération d'instructions de mise à jour pour amener le dispositif de traitement à générer un contenu de mémoire mis à jour dans l'ordre séquentiel déterminé d'étapes de génération et à mémoriser le contenu de mémoire mis à jour dans les secteurs cibles en fonction de l'ordre séquentiel déterminé de secteurs cibles.

**9.** Procédé selon la revendication 8, comprenant :

- la construction d'une représentation d'une relation de dépendance entre les secteurs comprenant la version actuelle de contenu de mémoire et les pages comprenant le contenu de mémoire mis à jour ;
- la détermination d'une première séquence de secteurs devant être utilisés pour mémoriser le contenu de mémoire mis à jour, et d'une deuxième séquence de pages modifiées indicative d'un ordre séquentiel de génération de contenu de mémoire des pages modifiées qui sont créées ;
- le fait d'inclure une information concernant la première séquence dans les instructions de mise à jour ;
- le traitement de la deuxième séquence de pages et la génération d'instructions de mise à jour correspondantes de façon à générer un contenu de mémoire mis à jour dans un ordre séquentiel déterminé par ladite deuxième séquence.

**10.** Procédé selon la revendication 9, dans lequel la détermination des première et deuxième séquences comprend les étapes suivantes consistant à :

(i) sélectionner un premier secteur à partir d'une liste de secteurs non traités en fonction d'un critère de sélection prédéterminé, le premier secteur comprenant au moins une partie du contenu de mémoire actuel ;
(ii) la mise en annexe à la deuxième séquence de toutes les pages dont le contenu de mémoire mis à jour dépend pour sa génération du contenu de mémoire actuel mémorisé dans le premier secteur et qui n'ont pas encore été ajoutées à la deuxième séquence ;

(iii) si une taille totale des pages de la deuxième séquence dépasse une taille totale de secteurs de la première séquence, la mise en annexe d'un ou de plusieurs secteurs précédemment inutilisés à la première séquence, de telle sorte que la taille totale de secteurs de la première séquence ne soit pas inférieure à la taille totale de pages de la deuxième séquence ;

(iv) la mise en annexe du premier secteur à la première séquence ;

(v) la répétition des étapes (i) à (iv) soit jusqu'à ce que la taille totale de secteurs de la première séquence soit suffisamment grande pour recevoir la version mise à jour de contenu de mémoire, soit jusqu'à ce qu'aucun secteur non traité ne remplisse le critère de sélection prédéterminé ;

(vi) si la taille totale de secteurs de la première séquence est trop petite pour recevoir la version mise à jour de contenu de mémoire, la mise en annexe d'un ou de plusieurs secteurs précédemment inutilisés à la première séquence ;

(vii) la mise en annexe de pages modifiées restantes, s'il y en a, à la deuxième séquence.

11. Procédé selon la revendication 10, dans lequel la sélection du premier secteur comprend la sélection d'un secteur ayant une relation de dépendance à un nombre de pages le plus petit.

12. Procédé selon la revendication 10 ou 11, dans lequel la liste de secteurs non traités est constituée par des secteurs qui ne comprennent que des pages modifiées.

13. Procédé selon la revendication 10 ou 11, dans lequel la liste de secteurs non traités comprend des secteurs qui comprennent des pages non modifiés.

14. Procédé selon la revendication 13, dans lequel la sélection du premier secteur comprend la sélection d'un secteur ayant une somme la plus petite du nombre de pages modifiées dépendant dudit secteur et du nombre de pages non modifiées comprises dans ledit secteur.

15. Procédé selon l'une quelconque des revendications 1 à 14, dans lequel le dispositif de traitement est conçu pour accéder aux données mémorisées dans le support de mémorisation sous la commande d'une unité de gestion de mémoire conçue pour organiser les données sous la forme de pages de mémoire de données dans un espace mémoire virtuel ; et pour projeter des pages de l'espace mémoire virtuel vers des adresses physiques du support de mémorisation.

16. Procédé selon la revendication 15, dans lequel l'unité de gestion de mémoire est conçue de façon à cartographier les pages de l'espace mémoire virtuel à l'aide d'une table de projection comprenant une information de projection entre des pages de mémoire virtuelle et des adresses de mémoire physique dans le support de mémorisation ; et dans lequel la génération d'instructions pour amener le dispositif de traitement à reprojeter la première page vers l'emplacement dans le deuxième secteur comprend la génération d'une table de pages mises à jour.

17. Procédé selon l'une quelconque des revendications 1 à 16, comprenant de plus la génération d'instructions pour amener le dispositif de traitement à mémoriser dans le deuxième secteur par le dispositif de traitement un contenu de mémoire mis à jour d'une pluralité de pages déterminées comme comprenant des changements respectifs.

18. Procédé de mise à jour de contenu de mémoire d'un support de mémorisation (212) d'un dispositif de traitement (101) d'une version actuelle (V1) à une version mise à jour (V2) du contenu de mémoire, le support de mémorisation étant configuré de façon à comporter, mémorisé, le contenu de mémoire organisé sous la forme d'un ou de plusieurs secteurs de mémoire (81 à 86, 601 à 606), chaque secteur ayant une taille de secteur prédéterminée, le dispositif de traitement étant configuré de façon à adresser le contenu de mémoire mémorisé sur le support de mémorisation sous la forme d'une ou de plusieurs pages de contenu de mémoire (617 à 619), chaque page ayant une taille de page prédéterminée non supérieure à la taille de secteur, et chaque page étant projetée vers un emplacement respectif dans le support de mémorisation, le procédé comprenant :

- la réception d'un élément de mise à jour delta comprenant des instructions de mise à jour pour amener le dispositif de traitement à mettre à jour un contenu de mémoire actuel mémorisé dans le support de mémorisation en un contenu de mémoire mis à jour,
- la mémorisation, en réponse aux instructions de mise à jour reçues, d'un contenu de mémoire mis à jour correspondant à une première page en un emplacement dans un deuxième secteur, la version actuelle de la première page étant projetée vers un emplacement dans un premier secteur du support de mémorisation, et la première page comprenant un changement de contenu de mémoire de la version actuelle à la version mise à jour ; et
- le fait de reprojeter, en réponse aux instructions de mise à jour reçues, la première page vers l'emplacement dans le deuxième secteur.

**19.** Procédé selon la revendication 18, dans lequel la mémorisation comprend :

- la lecture d'un contenu de mémoire actuel à partir du premier secteur ;
- la génération du contenu de mémoire mis à jour à partir du contenu de mémoire actuel lu et des instructions de mise à jour reçues ; et
- la mémorisation directe du contenu de mémoire mis à jour généré dans le deuxième secteur.

**20.** Dispositif de traitement (101) comprenant un support de mémorisation (212), le support de mémorisation étant configuré de façon à comporter, mémorisé sur celui-ci, un contenu de mémoire organisé sous la forme d'un ou de plusieurs secteurs de mémoire (81 à 86, 601 à 606), chaque secteur ayant une taille de secteur prédéterminée, le dispositif de traitement étant configuré de façon à adresser le contenu de mémoire mémorisé sur le support de mémorisation sous la forme d'une ou de plusieurs pages de contenu de mémoire (617 à 619), chaque page ayant une taille de page prédéterminée non supérieure à la taille de secteur, et chaque page étant projetée vers un emplacement respectif dans le support de mémorisation, le dispositif de traitement étant configuré :

- pour recevoir un élément de mise à jour delta (309) comprenant des instructions de mise à jour afin d'amener le dispositif de traitement à mettre à jour un contenu de mémoire actuel mémorisé dans le support de mémorisation en un contenu de mémoire mis à jour ;
- pour mémoriser, en réponse aux instructions de mise à jour reçues, un contenu de mémoire mis à jour correspondant à une première page en un emplacement dans un deuxième secteur, la version actuelle de la première page étant projetée vers un emplacement dans un premier secteur du support de mémorisation, et la première page comprenant un changement de contenu de mémoire de la version actuelle (V1) à la version mise à jour (V2) ; et
- pour reprojeter, en réponse aux instructions de mise à jour reçues, la première page vers l'emplacement dans le deuxième secteur.

**21.** Dispositif de traitement selon la revendication 20, dans lequel la taille de page est inférieure à la taille de secteur.

**22.** Dispositif de traitement selon la revendication 20 ou 21, dans lequel le support de mémorisation est un support de mémorisation rémanent.

**23.** Dispositif de traitement selon l'une quelconque des revendications 20 à 22, dans lequel le support de mémorisation est une mémoire flash.

**24.** Dispositif de traitement selon la revendication 23, dans lequel la mémoire flash est une mémoire NON-ET.

**25.** Dispositif de traitement selon la revendication 23, dans lequel la mémoire flash est une mémoire NON-OU.

**26.** Dispositif de traitement selon l'une quelconque des revendications 20 à 25, comprenant de plus une unité de gestion de mémoire pour commander l'accès au support de mémorisation par le dispositif de traitement, dans lequel l'unité de gestion de mémoire est conçue de façon à organiser des données sous la forme de pages de données dans un espace mémoire virtuel, chaque page ayant une taille de page prédéterminée, et dans lequel l'unité de gestion de mémoire est conçue de façon à projeter des pages de l'espace mémoire virtuel vers des adresses physiques du support de mémorisation.

**27.** Système de traitement de données pour générer une image de mémoire comprenant des données pour une mémorisation dans un support de mémorisation (212) d'un dispositif de traitement (101), le système de traitement de données étant configuré de façon à exécuter les étapes du procédé selon l'une quelconque des revendications 1 à 17.

**28.** Programme informatique comprenant des moyens formant code de programme conçus pour amener le dispositif de traitement (101) à exécuter, lorsqu'ils sont exécutés par un dispositif de traitement comprenant un support de mémorisation (212), les étapes du procédé selon la revendication 18 ou 19.

**29.** Programme informatique comprenant des moyens formant code de programme conçus pour amener le système de traitement de données à exécuter, lorsqu'ils sont exécutés par un système de traitement de données, les étapes du procédé selon l'une quelconque des revendications 1 à 17.

**30.** Support de données comprenant des instructions de mise à jour lisibles par ordinateur pour amener un dispositif de traitement à mettre à jour, lorsqu'elles sont traitées par le dispositif de traitement (101), un contenu de mémoire d'un support de mémorisation (212) du dispositif de traitement d'une version actuelle (V1) à une version mise à jour (V2) du contenu de mémoire, le support de mémorisation étant configuré de façon à comporter, mémorisé, le contenu de mémoire organisé sous la forme d'un ou de plusieurs secteurs de mémoire (81 à 86, 601 à 606), chaque secteur ayant une taille de secteur prédéterminée, le dispositif de traitement étant configuré de façon à adresser le contenu de mémoire mémorisé sur le support de mémorisation sous la forme d'une ou de plusieurs pages de contenu de mémoire (617 à 619), chaque page ayant une taille de page prédéterminée non supérieure à la taille de secteur, et chaque page étant projetée vers un emplacement respectif dans le support de mémorisation, les instructions de mise à jour lisibles par ordinateur comprenant :

- des instructions de mise à jour pour amener le dispositif de traitement à mémoriser un contenu de mémoire mis à jour correspondant à une première page en un emplacement dans un deuxième secteur, la version actuelle de la première page étant projetée vers un emplacement dans un premier secteur du support de mémorisation, et la première page comprenant un changement de contenu de mémoire de la version actuelle à la version mise à jour ; et
- des instructions de mise à jour pour amener le dispositif de traitement à reprojeter la première page vers l'emplacement dans le deuxième secteur.

FIG. 1

FIG. 2

FIG. 3a

FIG. 3b

*a)*

*b)*

*c)*

FIG. 4

FIG. 5

*FIG. 6a*

*FIG. 6b*

*FIG. 7*

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6018747 A
- WO 2004031961 A
- WO 05085996 A
- WO 05040982 A
- WO 2007020083 A
- US 6546552 B

**Non-patent literature cited in the description**

- **BRENDA BAKER ; UDI MANBER ; ROBERT MUTH.** Compressing Differences of Executable Code. *ACM SIGPLAN Workshop on Compiler Support for System Software (WCSSS'99,* 1999
- Delta Storage for Arbitrary Non-Text Files. **CHRISTOPH REICHENBERGER.** Proceedings of the 3rd international workshop on Software configuration management. ACM press, 1991, 144-152
- **W. F. TICHY.** The String-to-String Correction Problem with Block Move. *ACM transactions on Computer Systems,* November 1984, vol. 2 (4